# EUROPEAN PATENT APPLICATION

(11) **EP 1 278 161 A2**
(43) Date of publication of application: **22.01.2003**
(21) Application number: 02014262.6
(22) Date of filing: 26.06.2002
(51) Int. Cl.: G06T 17/00

(54) **Image composition system and method thereof, image generation apparatus and method thereof, storage medium and computer program for image composition**

(30) Priority: 27.06.2001 JP 2001194138
(71) Applicant: SONY CORPORATION, Tokyo (JP)
(72) Inventor: Numaoka, Chisato, Shinagawa-ku, Tokyo (JP)
(74) Representative: Müller - Hoffmann & Partner

(57) **Abstract**

Fitting composition service performed in cooperation with a server separately from a server that synthesizes fitting images through the use of a portable terminal such as a PDA. It is verified whether body images of a user and product utilization rights concerning garment image data are under protection mode. Then, graphic processing such as coordinate transformation and animation generation of a fitting image is performed on either the server that has synthesized the fitting image or a portable terminal according to conditions set forth previously. With the protection of the privacy of the user and the product rights to utilize the garment images, the fitting image is stored in a portable terminal as to enable the user to look at the synthesized fitting image regardless of location.

## Description

### CROSS REFERENCE TO RELATED APPLICATIONS

This application claims priority to Japanese Patent Application No. JP 2001-194138, filed on June 27, 2001, the disclosure of such application being herein incorporated. by reference to the extent permitted by law.

### BACKGROUND OF THE INVENTION

### 1. Field of the Invention

The present invention relates to electronic fitting technology for providing a fitting composition service by which a synthesized fitting image of a user trying on garment is generated on the basis of body image data and garment image data, and by which image conversion or generation of animation of the fitting image is performed. In particular, the present invention relates to a fitting image providing system and a method for providing a fitting image, both providing a fitting composition service to a remote user terminal over a network. Furthermore, the present invention relates to a fitting image generating apparatus and a method for generating a fitting image, both performing composition, coordinate transformation and generation of a fitting image on the basis of image data of body and garment. Furthermore, the present invention relates to a fitting image utilization terminal, a method for utilizing fitting image, a storage medium and a computer program, all bearing part of a fitting composition service by which the display, the coordinate transformation and the animation generation of a fitting image are performed.

The present invention more specifically relates to a fitting image providing system, a method for providing a fitting image, a fitting image generating apparatus, a method for generating a fitting image, a fitting image utilization terminal, a method for utilizing a fitting image, a storage medium and a computer program, for utilizing a synthesized or composed fitting image regardless of location by means of connecting a user terminal such as a personal digital assistant (PDA) or the like to a server located in a store or business establishment, for example. The synthesized fitting image provides fitting simulation independent of location, permits assurance of protection of privacy in relation to the body image data of the user, that is necessary for the composition of a fitting image, and may contribute to the protection of a copyrights of garment image data or rights for utilization of the contents of the garment image data.

### 2. Description of the Related Art

With the development of computing technologies regarding information processing, communication technology and the like, computer systems have been widely spread. Moreover, a demand for network computing technology for mutually connecting computers has been on increase. Under an environment of network connection, it is possible to smoothly perform joint ownership of computer resources as well as cooperative operations such as joint ownership of information, circulation, distribution, exchange of information and the like.

There are various forms of network having mutually connected computers, for example, a local area network (LAN) such as an Ethernet, which is constructed locally, the Internet, which has developed on to a network on a literally worldwide level as a result of repetitions of mutual connections of networks, and the like.

The Internet is a network of networks as the name indicates, which has grown up as network of high proportions as a result of autonomous mutual connections of servers (chiefly being Uniplexed Information and Computing System (UNIX) productstations) installed in universities, research institutions and the like. Innumerable servers are presently interconnected with the Internet. Each server opens various resource objects to innumerable clients. Servers on the Internet are ordinarily connected with each other on the basis of Transmission Control Protocol/Internet Protocol (TCP/IP).

On the Internet, many services such as World Wide Web (WWW), News, Teletypewriter Network (TELNET), File Transfer Protocol (FTP), Gopher and the like are opened. Among such services, WWW is a wide area information retrieval system providing an information space under a hyperlink structure. WWW is one of the biggest factors of the explosive growth and the rapid spread of the Internet. On the WWW system, the contents of various media such as texts, image, sound and the like can be looked at in Hi Text format. Hypertext information processed on WWW is written by a description language in hypertext format, utilizing a language so called as Hyper Text Markup Language (HTML). In conformity with TCP/IP, various information resources composed of those HTML documents and the like are specified by an identifier in a format called as Uniform Resource Locator (URL), and the resources can be transferred in accordance with Hyper Text Transfer Protocol (HTTP) (the fact is well known). Then, on the side of a client, HTML contents can be downloaded by the use of a WWW browser to be displayed on a screen as a home page.

Moreover, in recent years, delivery services of moving picture contents have become possible as the speed of telephone lines (such as Asymmetric Digital Subscriber Line (ADSL) and the like), cable television lines and the like have become higher. For example, when sound, video image and the like are delivered through the Internet, the so-called "streaming" technology has been developed, in which a user does not reproduce a file after the user has completed the download of the file but instead the user can reproduce the file while downloading. As an example of content delivery systems having installed the streaming technology, there is for example, "Real System G2", "Windows Media Technologies" and the like.

The spread rate of the Internet has already become high, and the Internet has been deeply introduced into various research institutions such as universities, corporation offices, ordinary households, and the like. Recently, the Internet has been used as a measure of various pieces of business such as commodity trading and the like as well as measure of information delivery, that is a commercial transaction such as the so-called "net sale" or "online shopping".

If net sale is applied to, for example, digital information such as computer software program, audio and/or video contents, and the like, the manufacturing costs of recording media such as a compact disc (CD), a digital versatile disc (DVD) and the like, as well as many of physical means for delivering commodities (or media) to a consumer, such as a distribution routes, marketing routes and the like can be simplified.

Moreover, even if a net sale is applied not to digital information but to ordinary commodity trading, all the things that a seller should do are to put the information on the commodities in the form of a Web page and wait for the responses (such as purchasing deeds and the like) from consumers. Consequently, physical measures such as show cases in a store and the like can be omitted and permitting attempts at reduction of costs.

If conventional mail-order business and the net sale are compared with each other, the former requires the burden and the costs of delivering catalogues or the like to fixed customers and arbitrary consumers. On the contrary, in the latter case, commodity information can be delivered all over the world considerably faster than under the conventional channels only by uploading data content corresponding to catalogues to a Web site. In other words, the net sale has the immediacy of commodity information, and sales contracts of commodities can be smoothly and rapidly concluded. Moreover, because the initial costs necessary for commodity sales are low under the network distribution, it becomes possible to conclude dealings coping with the diverse demands of every ordinary consumer nearly one by one by subdividing dealing units.

Moreover, it is common fact that commodity distributors provide commodity catalogues on their Web pages on the net sales. On such pages, the distributors can insert captured images of actual commodities. Purchasers can judge whether a commodity match with their demands or not on the basis of such images.

Moreover, if the images provided on the pages are plane two-dimensional images, it is difficult for purchasers to grasp the entities and real images of commodities. The skilled persons in the art would be able to consider that three-dimensional computer graphic (CG) images may be used in place of the two-dimensional images.

Moreover, it is possible to supply "electronic fitting" to users considering the purchase of garment online in real time. The electronic fitting executes image composition processing based on body image data of a user and garment image data to provide a figure of the user trying on the garment. The electronic fitting is a very convenient sale promotion tool for consumers trying purchase from remote places. It is needless to say that the electronic fitting is also convenient for consumers visiting stores directly, because they can omit the trouble of changing garment by means of the electronic fitting, though they can physically perform fitting. By means of the electronic fitting, it is also possible to enlarge or reduce figures of consumers themselves who are trying on garment or to rotate the figures for enabling them to verify their figures viewed from their backs by the execution of general geometric transformation processing or the like.

Fitting apparatus realizing the imaginary fitting in such a way are hitherto known.

For example, Unites States Patent Publications No. 4,149,246 and No. 4,539,585 disclose basic ideas concerning fitting apparatus.

By means of the preview apparatus disclosed in the former United States Patent Publication No. 4,149,246, a series of poses of a user wearing garment can be generated on a computer to enable the user to preview the generated poses without the user's actual wearing of the garment. For that, the user inputs data concerning a series of poses in a format in which the data can be read by the computer, and the computer mixes images of the garment and images of the user, or the computer executes the superimposing processing of them, and thereby synthesized images of the user wearing the garment can be displayed to the user.

Moreover, the latter United States Patent Publication No. 4,539,585 discloses a system producing ordered garment on the basis of personal tailoring size data of customers, optional information of garment, and the like. The system is composed of a center station providing services to a plurality of remote devices through communication lines. The remote devices are respectively equipped with an interactive graphic display terminal for the designation of combinations of physical data such as the sizes of customers, optionally selected data, pattern data of garment, and the like. The center station is equipped with a cutting device for enabling the completion of designed garment on the basis of the final combinations.

Moreover, in recent years, it has become possible to synthesize fitting images by means of software for synthesizing fitting images on the Internet. For example, "My Virtual Model" (a registered trademark), which was developed by Public Technologies Multimedia (PTM) Inc. based at Montreal in Canada, produces a three-dimensional computer graphic (CG) model on the basis of a user's figure data input by the user, and can generate fitting images by synthesizing CG images of garment with the model. It has become possible to use the system of PTM Inc. in the home page of "LAND'S END" from November in 1998. The system can not only display fitting images but also recommend style designs.

Moreover, also in Japan, Toyobo co. Ltd. has developed fitting image generation software, "Dressing Sim", at a comparatively high level, and has begun to manufacture and sell it.

In any of the aforesaid related art, it is possible to realize that fitting systems have entered into their practical stage as online services.

The inventor of the present invention considers it preferable that an electronic fitting service fulfills the following conditions.

### (1) SPOT ORIENTED:

The electronic fitting service may provide access to garment data related to a piece of garment that has caught the user's attention at a store by simply acquiring the ID of the requested piece of garment.

### (2) IMMEDIACY:

The electronic fitting service can acquire garment data from a database by accessing, for example, a network in the store. Then, three-dimensional garment images are synthesized or composed so that fitting images can be displayed very fast.

### (3) REALISM:

Even if the electronic fitting service has a small screen, fitting images may be displayed to an extent in which customers can grasp a fitting image.

### (4) PRIVACY PROTECTING:

The electronic fitting service protects personal data such as body images of customers and the like by storing the personal data in a removable medium (which will be described later) having data access protecting function, such as a memory stick (a trademark) device or the like.

### (5) REPRODUCIBILITY:

A customer can store accessed garment data for a predetermined period of time and can verify fitting images later again.

### (6) ENTERTAINMENT:

The electronic fitting service permits changing the shapes of image such as fitting images. For example, if a user selects a shirt, the service provides the function of displaying a necktie and a suit that would fit to the shirt in combination, the function for the customer's own designing of colors and patterns, and the like for increasing customer's entertainment.

### (7) REAL TIME ACCESSIBILITY:

The electronic fitting service can provide real time interaction through fitting images.

### (8) INTERACTIVITY

In the electronic fitting service, a customer can take the lead in controlling the display forms of fitting images.

### (9) SUPER REALITY:

Images and sounds that cannot be actually experienced are made to look as if they actually existed.

However, the aforesaid fitting systems respectively presuppose that the fitting image generation service is performed online by a server. Consequently, the fitting systems do not have sufficient contrivance for performing only part of the fitting image composition service offline. For example, the fitting composition service synthesizing fitting image in cooperation with a server in a store through processing part of the composition off line on a portable terminal such as a personal digital assistant (PDA) or the like. In other words, the fitting systems of the related art for example do not disclose utilization forms such as storing synthesized fitting images in a removable recording medium or a storage device (such as a random access memory (RAM), a hard disk (HD) or the like) or, coordinate transformation of fitting images, which are synthesized on a terminal device (including a portable terminal apparatus) different from the device that synthesized the fitting images or are synthesized by the server, or the graphic processing of the fitting images such as generation of animations. Accordingly, it is necessary for a user to connect a specific computer in which the server is constantly connected and to request processing regarding a fitting image in order to receive the fitting image services.

Moreover, the conventional fitting image providing systems perform image processing in their servers by receiving the inputs of personal information such as personal body shape data and captured data into the servers and by storing the information into the storage devices of the servers. Consequently, because it is required for the user to disclose the personal information such as the body shape data at least to the servers, the conventional systems have a possibility of causing disadvantages to the user from the point of view of privacy protection.

### SUMMARY OF THE INVENTION

According to a preferred embodiment of the present invention, it is preferable to provide an optimum fitting image providing system and a method for providing a fitting image, both capable of supplying a fitting composition service to a user terminal at a remote place on a network, an optimum fitting image generating apparatus and a method for generating a fitting image, both capable of performing the composition, the coordinate transformation and the animation generation of a fitting image on the basis of the body image data of the user and garment image data, and an optimum fitting image utilization terminal, a method for utilizing a fitting image, a storage medium and a computer program, all capable of bearing a part of a fitting composition service for the display, the coordinate transformation and the animation generation of a fitting image.

According to another preferred embodiment of the present invention, is preferable to provide an optimum fitting image providing system, a method for providing a fitting image, a fitting image generating apparatus, a method for generating a fitting image, a fitting image utilization terminal, a method for utilizing a fitting image, a recording medium, and a computer program, all capable of utilizing a synthesized fitting image independently of locations in cooperation of a user terminal such as a personal digital assistant (PDA) with a server at a store.

According to a further preferred embodiment of the present invention, it is preferable to provide an optimum fitting image providing system, a method for providing a fitting image, a fitting image generating apparatus, a method for generating a fitting image, a fitting image utilization terminal, a method for utilizing a fitting image, a recording medium, and a computer program, all capable of utilizing synthesized fitting images independently of locations, taking care of the privacy protection of the body image data of a user, which data are necessary for the composition of a fitting image, and of the protection of a copyright of garment image data or a right pertaining to the use of the contents of the garment image data.

According to a still further preferred embodiment of the present invention, it is preferable to provide an optimum fitting image providing system, a method for providing a fitting image, a fitting image generating apparatus, a method for generating a fitting image, a fitting image utilization terminal, a method for utilizing a fitting image, a storage medium, and a computer program, all capable of performing fitting image composition safely without providing personal data to a server by performing image composition processing in a personal portable terminal in the case where a user does not want to disclose personal information such as the body image data of the user.

According to a still further preferred embodiment of the present invention, it is preferable to provide an optimum fitting image providing system, a method for providing a fitting image, a fitting image generating apparatus, a method for generating a fitting image, a fitting image utilization terminal, a method for utilizing a fitting image, a storage medium, and a computer program, all making it easy for a specific user to secure a service concerning fitting images within a range of a fixed limitation independently of locations and time by providing the service to the user safely without infringing a copyright and another utilizing right of garment data, which are owned by a provider of garment images, by setting a utilizing right of the garment data to the user within the fixed limitation, in the case where the usage of the garment data should be limited because the garment data should be protected as a product or another reason.

The present invention has been made in consideration of the aforesaid preferable features. A first preferred embodiment of the present invention provides a fitting image providing system for providing on a computer network a fitting image formed by image composition based on body image data of a user and garment image data, the system including: a user terminal including at least ID reading means for acquiring a garment ID, radio communication means and fitting image displaying means; an interface for connecting the user terminal to the computer network; and an image processing server connected to the computer network to perform image composition of the fitting image based on the body image data of the user and the garment image data.

It is to be noted that, "system" hereupon means a logically group of a plurality of apparatuses (or functional modules for realizing specific functions), and it does not especially matter whether each of the apparatuses and the functional modules are included in a same housing or encapsulation.

According to the fitting image providing system according to the first preferred embodiment of the present invention, part of a fitting composition service can be performed offline by being separated from the server of the fitting composition service as follows. A fitting image synthesized in cooperation with a server in a store by the use of a personal portable terminal such as a PDA is stored in a removable recording medium or a storage device (such as a RAM, a HD or the like) of the portable terminal, and the graphic processing of the synthesized fitting image such as its coordinate transformation, its animation generation, or the like is performed in a terminal device (including the portable terminal apparatus) or a server, both being different from the device that has synthesized the fitting image.

Under a privacy protection mode for protecting the body image data, the user terminal acquires the garment image data from the garment ID, and generates the fitting image by performing image composition of the fitting image data.

Conversely, under other modes, the user terminal transfers the body image data to the image processing server through the computer network and requests generation of the fitting image data.

In addition, the user terminal executes acquisition process for acquiring utilization rights corresponding to the garment ID if the user does not have the utilization rights.

Also, the image processing server transfers the fitting image data to the user terminal if the user has utilization rights corresponding to the garment ID.

Moreover, the image processing server transfers the fitting image data to the user terminal by streaming or in a format under which the fitting image data cannot be reutilized if the user does not have the utilization rights.

A second preferred embodiment of the present invention is characterized by a method for providing fitting image formed by image composition based on body image data of a user and garment image data on a computer network including a user terminal having at least ID reading means for acquiring a garment ID, radio communication means and fitting image displaying means, an interface for connecting the user terminal to the computer network and an image processing server connected to the computer network to perform image composition of the fitting image based on the body image data of the user and the garment image data, the method including the steps of: acquiring the garment image data from the garment ID and generating the fitting image by performing image composition of the fitting image data, under a privacy protection mode for protecting the body image data; and transferring the body image data to the image processing server through the computer network and requesting generation of the fitting image data, under other modes.

Such method may further include the step of acquiring utilization rights of garment image data corresponding to the garment ID if the user does not have the utilization rights.

In addition, the method for providing fitting image according to the second preferred embodiment of the present invention may further include the steps of: transferring the fitting image data to the user terminal, if the user has the utilization rights of garment image data corresponding to the garment ID; and transferring the fitting image data to the user terminal by streaming or in a format in which the fitting image data cannot be reutilized, if the user does not have the utilization rights.

According to the method for providing a fitting image of the second preferred embodiment of the present invention, part of a fitting composition service can be performed offline by being separated from the server of the fitting composition service in a way that a fitting image synthesized in cooperation with a server in a store by the use of a personal portable terminal such as a PDA or the like is stored in a removable recording medium or a storage device (such as a RAM, a HD or the like) of the portable terminal and the graphic processing of the synthesized fitting image such as its coordinate transformation, its animation generation, or the like is performed in a terminal device (including the portable terminal apparatus) or a server, both being different from the device that has synthesized the fitting image.

A third preferred embodiment of the present invention provides a fitting image generating apparatus or method for generating fitting image formed by performing image composition based on body image data of a user and garment image data, the apparatus or method including: receiving means or step for receiving request for generation of a fitting image formed by image composition based on body image data of a user and garment image data; acquisition means or step for acquiring the garment image data corresponding to garment requested by the user; checking means or step for checking whether the user has rights to utilize the garment image data; generating means or step for generating the fitting image; and transmission means or step for transmitting the fitting image to a user terminal according to possession of the rights to utilize the garment image data.

In fitting image generating apparatus according to the third preferred embodiment of the present invention, the means or step for transmitting fitting image to the user terminal transfers the generated fitting image data to the user terminal if the user has the rights to utilize the garment image data, and the transferring means or step transfers the generated fitting image data to the user terminal by streaming or in a format under which the fitting image data cannot be reutilized if the user does not have the rights to utilize the garment image data.

A fourth preferred embodiment of the present invention provides a fitting image utilization terminal or method for utilizing a fitting image formed by performing image composition based on body image data of a user and garment image data, the terminal or method including: ID reading means or step for acquiring garment ID; communication means or step for establishing connection to a computer network; checking means or step for checking existence of rights to utilize the garment image data; generating means or step for generating the fitting image; reception means or step for receiving the fitting image and/or the garment image data according to possession of the rights to utilize the garment image data; and display means or step for displaying the fitting image.

The fourth preferred embodiment of the present invention may further include an acquisition means or step for acquiring utilization rights of the garment image data corresponding to the garment ID if the user does not have the utilization rights. As a result, the user may acquire the utilization rights smoothly and freely utilize the fitting image.

In addition, it is preferable that the receiving means or step may receive fitting image data from an image processing server, if the user has utilization rights of the garment image data corresponding to the garment ID. As a result, the fitting image may be freely utilized and re-utilized on the user terminal.

Conversely, it is preferable that the receiving means or step may receive the fitting image data from the image processing server by streaming or in a format under which the fitting image data cannot be reutilized, if the user does not have the utilization rights. As a result, utilization of fitting image on the user terminal can be restricted, so that it is possible to protect copyrights related to the garment data.

In addition, according to the fitting image utilization terminal or method according to the fourth preferred embodiment of the present invention, it is preferable to further include a fitting image generating means or step for performing image composition of body image data of the user and garment image data. Also, it is preferable that under a privacy protection mode for protecting the body image data, the user terminal or method acquires the garment image data from the garment ID, and generates the fitting image by performing image composition of the fitting image data. Moreover, under other modes, it is preferable that the user terminal or method transfers the body image data to an image processing server and requests generation of the fitting image data.

Moreover, a fifth preferred embodiment of the present invention provides a storage medium storing software program in computer readable form, the software program executing on a computer system a process for generating a fitting image formed by image composition based on body image data of a user and garment image data, the software program including the steps of: receiving a request for generation of the fitting image; acquiring the garment image data corresponding to garment requested by the user; checking whether the user has rights to utilize the garment image data; generating the fitting image; and transmitting the fitting image to a user terminal according to possession of the rights to utilize the garment image data.

In addition, a sixth preferred embodiment of the present invention provides a storage medium storing software program in computer readable form, the software program executing on a computer system a processing for utilizing a fitting image formed by image composition based on body image data of a user and garment image data, the software program including: acquiring garment ID; establishing connection to a computer network; checking existence of rights to utilize the garment image data; generating the fitting image; receiving the fitting image and/or the garment image data according to possession of the rights to utilize the garment image data; and displaying the fitting image.

The storage medium according to either the fifth or the sixth preferred embodiments of the present invention is a medium for providing (computer) software program in computer-readable for execution on, for example, a general purpose computer system capable of executing various program codes. Such a medium may include, for example, a removable and portable storage medium such as a compact disc (CD) (a trademark), a floppy (a trademark) disc (FD), a magneto-optical disc (MO), and the like. Or, it is also technically possible to provide computer software program to a specific computer system through a transmission medium or the like such as a network (the network does not need distinction between being wireless or wired) and the like.

Such a storage medium defines a structural or functional cooperative relation between computer software program and the storage medium for realizing a predetermined function of computer software program on a computer system. In other words, by the installation of predetermined computer software program into a computer system through the storage medium according to the fifth or the sixth preferred embodiments of the present invention, a cooperative function is exhibited on the computer system, and it may possible to obtain similar operations and advantages to those of the fitting image generating apparatus or the method of generating a fitting image according to the third preferred embodiments of the present invention, and the fitting image utilization terminal or the method for utilizing a fitting image according to the fourth preferred embodiments of the invention.

In addition, a seventh preferred embodiment of the present invention provides computer program executing on a computer system a processing for generating fitting image formed by image composition based on body image data of a user and garment image data, the computer program including the steps of: receiving a request for generation of the fitting image; acquiring the garment image data corresponding to garment requested by the user; checking whether the user has rights to utilize the garment image data; generating the fitting image; and transmitting the fitting image to a user terminal according to possession of the rights to utilize the garment image data.

Moreover, an eighth preferred embodiment of the present invention provides a computer program executing on a computer system a processing for utilizing a fitting image formed by image composition based on body image data of a user and garment image data, the software program including: acquiring garment ID; establishing connection to a computer network; checking existence of rights to utilize the garment image data; generating the fitting image; receiving the fitting image and/or the garment image data according to possession of the rights to utilize the garment image data; and displaying the fitting image.

The computer program according to either the seventh or the eighth preferred embodiments of the present invention defines a computer program written in computer-readable form so as to realize predetermined processing on a computer system. In other words, a cooperative function is exhibited on the computer system by the installation of the computer program according to the seventh and the eighth preferred embodiments of the present invention, and similar operations and advantages to those of the fitting image generating apparatus or the method for generating a fitting image according to the third preferred embodiment of the present invention, and the fitting image utilization terminal or the method for utilizing a fitting image according to the fourth preferred embodiment of the invention may be obtained.

Moreover, according to the electronic fitting service of the preferred embodiments of present invention, if a user does not want to disclose personal information such as body image data or the like, image composition processing can also be done in a personal portable terminal. In other words, the user can safely perform the fitting image composition without providing personal data of the user to an external computer such as a server.

Furthermore, according to the preferred embodiments of the present invention, if garment data are protected as copyrights, product utilization rights are assigned to a user within predetermined limitations, and thereby the garment image data can safely be provided to a specific user without the possibility of the infringement of the copyrights owned by a provider of the garment data and the like. As a result, it is made to be easy that the user can enjoy a service concerning fitting images within the range of the limitation independent of place and time.

### BRIEF DESCRIPTION OF THE DRAWINGS

The above and other objects, features and advantages of the present invention will become more apparent to those skilled in the art from the following description of the presently preferred exemplary embodiments of the invention taken in conjunction with the accompanying drawings, in which:
Fig. 1 is a schematic view showing the configuration of a computer network 1 related to an electronic fitting service, according to a preferred embodiment of present invention;
Fig. 2 is a schematic view showing an example of the configuration of a one-dimensional bar code;
Fig. 3 is a schematic view showing configuration examples (in a stack system) of two-dimensional bar codes;
Fig. 4 is a schematic view showing configuration examples (in a matrix system) of two-dimensional bar codes;
Fig. 5 is a schematic view showing a configuration example of a cyber code;
Fig. 6 is a schematic functional block diagram for illustrating a reading operation of radio frequency ID (RF-ID) from a radio frequency (RF) tag;
Fig. 7 is a schematic view showing the internal structure of an MG-R compatible memory stick;
Fig. 8 is a schematic view showing an example of the internal hardware configuration of a typical portable fitting apparatus 10, according to a preferred embodiment of the present invention;
Fig. 9 is a schematic view showing another example of the internal hardware configuration of a typical portable fitting apparatus 10, according to a preferred embodiment of the present invention;
Fig. 10 is a schematic view showing a further example of the internal hardware configuration of a typical portable fitting apparatus 10, according to a preferred embodiment of the present invention;
Fig. 11 is a view showing peripheral equipment connected with peripheral equipment interfaces 88/97/105, according to a preferred embodiment of the present invention;
Fig. 12 is a flowchart showing the operation of the portable fitting apparatus 10 related to the image composition processing of image data of fitting garment (or wearable things such as clothes, costume, glasses, wigs, accessories and the like) in a boutique or the like with body image data, according to a preferred embodiment of the present invention;
Fig. 13 is a flowchart showing a procedure in a case where product utilization rights is judged to be not owned or possessed by a user, according to a preferred embodiment of the present invention;
Fig. 14 is a flowchart showing a procedure of the portable fitting apparatus 10 for displaying a synthesized image by means of garment image data written in a readable and writable removable storage medium, according to a preferred embodiment of the present invention;
Fig. 15 is a flowchart showing a procedure for checking whether the portable fitting apparatus 10 has a product utilization rights connected with garment data, according to a preferred embodiment of the present invention;
Fig. 16 is a flowchart showing a procedure of the portable fitting apparatus 10 or a domestic image processing server 53 for synthesizing a fitting image in an offline mode from an image processing server 23 in a boutique, according to a preferred embodiment of the present invention; and
Fig. 17 is a flowchart showing a procedure of the image processing server 23 in the boutique for offline fitting image composition processing, according to a preferred embodiment of the present invention.

### DESCRIPTION OF THE PREFERRED EMBODIMENTS

Hereinafter, preferred embodiments of the present invention are described in detail with reference to the attached drawings.

A preferred embodiment of the present invention provides an electronic fitting service for enabling a user to look at a synthesized or composition fitting image regardless of location, by making a user terminal such as a personal digital assistant (PDA) and the like connect with a server located in a retail shop such as a boutique or the like, through a network such as the Internet. By means of the electronic fitting service according to the present invention, protection of privacy related with body image data, which is necessary for the composition of a fitting image, and copyrights or rights related to content usage, are protected while the synthesized fitting image can be used regardless of location.

### A. NETWORK CONFIGURATION

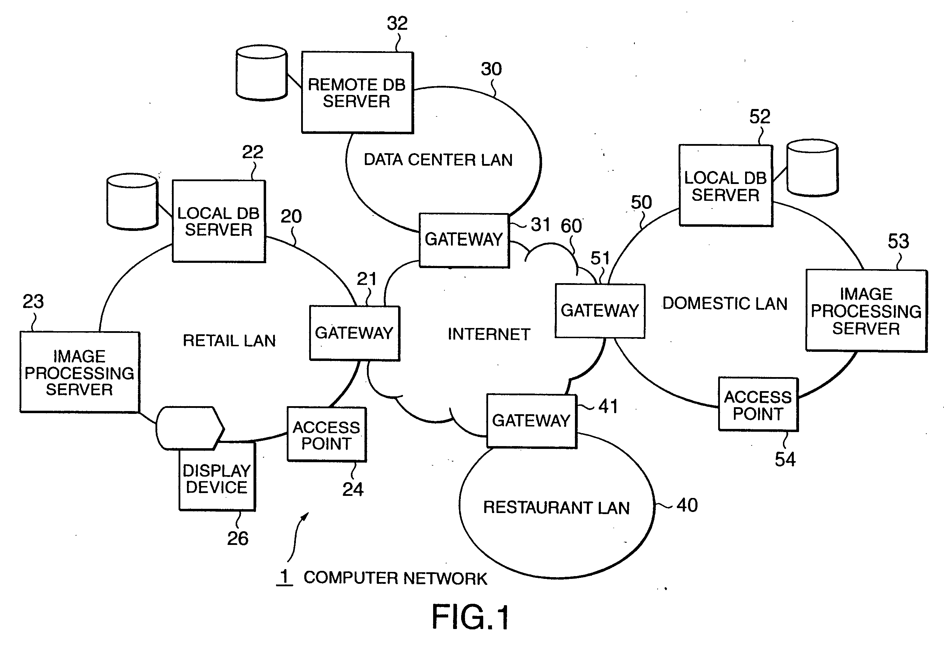

Fig. 1 is a typical view showing the configuration of a computer network 1 to which an electronic fitting service according to the present invention is applied.

The computer network 1 may include a portable fitting apparatus 10 owned by a garment purchaser or a user of an electronic fitting service which hereinafter will be referred to simply as a "user", a local network or retail LAN 20, which is provided in a store (or a retail shop) such as a boutique or the like where garment and garment image data are provided, a data center LAN 30 provided with a remote data server 32 performing the database management of various pieces of information to be used in the electronic fitting service, a restaurant LAN (or a store LAN other than a restaurant) 40 that is built in a restaurant and is equipped with a table type display 42 (or an interactive graphic terminal in another form in which the electronic fitting service can be used), a domestic LAN 50 built in the house of user of the electronic fitting service, and a wide area network 60 such as the Internet, which connects the local networks to each other. Each of the local networks 20, 30, 40 and 50 are connected with the Internet 60 through gateways 21, 31, 41 and 51.

On the retail LAN 20 built in a store (or a retail shop) such as a boutique or the like, which provides garment and garment image data, a local database server 22, an image processing server 23, an access point 24, a display device 26 and the like are connected with each other.

The local database server 22 is a server for performing database management of local information in the retail shop such as customer data, the information on garment and other merchandise, account information such as sales information and other pieces of information or data.

The image processing server 23 includes a server for performing the electronic fitting service for providing a fitting image of a customer trying a designated piece of garment or clothing by executing image composition or synthesizing of fitting image by computer graphic processing on the basis of garment image data and body image data of the customer. The image processing server 23 generates fitting images of a plurality of poses of the customer, and further performs geometric transformation such as rotation, enlargement, reduction, zooming or the like of the fitting image, and the generation of an animation in which the customer acts by trying the garment on, etc. The image processing server 23 may perform not only the file transfer of the fitting images to a display device, through which the customer of the portable fitting apparatus 10 and the like looks at the fitting images in Hyper Text Transfer Protocol (HTTP), File Transfer Protocol (FTP) format or the like, but also may perform real time distribution of images by utilizing streaming technology.

The display device 26 is used for verification data held on the local database server 22 and results of processing by the image processing server 23 of the retail shop. The electronic fitting service basically provides fitting images on the portable fitting apparatus 10 owned by a user, but the user may enjoy the electronic fitting images on the display device 26 having a screen larger than that of the portable fitting apparatus 10, when the user is in the retail shop. At this time, the user does not have to change clothes (garment).

The access point 24 may include an interface for establishing connection to a communication network such as a wireless LAN, in accordance with IEEE 802.11b or the like, or radio (or wireless) communication means in accordance to Bluetooth (a trademark) or the like, and the access point 24 may be used for wireless connection of the portable fitting apparatus 10 held by a customer visiting the retail shop to the retail LAN 20. For example, the access point 24 constantly transmits beacons to detect the portable fitting apparatus 10. Then a recognizable IP address is dynamically assigned to the detected portable fitting apparatus 10 by means of Dynamic Host Configuration Protocol (DHCP) or the like, for making the portable fitting apparatus 10 connectable to the retail LAN 20. If the retail LAN 20 and the portable fitting apparatus 10 both correspond to Internet Protocol Version 6 (IPV 6), it is possible to make the portable fitting apparatus 10 connectable to the retail LAN 20 without having to assign the IP address dynamically.

Moreover, identification information (ID) may be assigned to each piece of garment available for purchase in the boutique. The garment ID is exhibited in a format such as a one-dimensional bar code, a two-dimensional bar code, a cyber code, radio frequency ID (RF-ID), or the like (to be described later). The ID of each piece of garment is managed on the local database server 22.

It is to be noted that only one retail LAN 20 is drawn in Fig. 1, but actually retail shops are geographically located scattered around various regions of a whole area. Consequently, it is expected that many retail LAN's 20 exist on the computer network 1.

Moreover, in Fig. 1, the local database server 22 and the image processing server 23 are drawn as including different computers, but it is needless to say that a single computer may be equipped with the server functions of both the servers 22 and 23, for example. Besides, the gateway 21 is preferably configured as a computer independent of the local database server 22 or the image processing server 23 in consideration of security. Of course, one computer may be equipped with two or more server functions.

Garment image data and garment ID on each retail LAN 20, body image data of each user utilizing the electronic fitting service and other user information, etc. are run by a data center for performing unified control of the data on the computer network 1. Such data center provides the data center LAN 30 and disposes the remote data server 32 for managing the information concerning garment and a user unitarily on the LAN 30. The remote data server 32 can be accessed from the image processing servers 23/53, the portable fitting apparatus 10 and the like through the Internet 60.

The body image data of each user are private information, and garment image data are accompanied by copyrights or rights associated with the usage of the other contents. Consequently, the remote data server 32 properly manages the user information and the garment information from the point of view of privacy protection, copyrights, content utilization rights, and the like.

On the restaurant LAN 40 built in a restaurant or drink bar such as a café or the like (or a store other than a restaurant), an interactive graphic terminal such as a table type display 42 and the like is installed, having a screen larger than that of the portable fitting apparatus 10. The table type display 42 may be constituted by the use of, for example, an organic electroluminescent (EL) element, or the like. A plurality of users may use the electronic fitting service by sitting at a table with the table type display 42.

It is to be noted that, though only a single restaurant LAN 40 is drawn in Fig. 1, actually restaurants and other stores are scattered more or less randomly in various locations of a whole area. Consequently, it is expected to be understood that many restaurant LAN's exist on the computer network 1.

On the domestic LAN 50 built in the home of a user of the electronic fitting service, the local database server 52, the image processing server 53, the access point 54 and the like are connected with each other.

The local database server 52 is a server for performing the database management for each house regarding the body image data of each user and other user information, garment image data and image data of other commodities to be objects of the electronic fitting service, and the like existing in each house. Because the garment image data and the image data of the other commodities are accompanied by a copyright or another content utilization rights, which are owned by retail shops or creators, only the garment image data and the commodity image data to which the user has acquired rights to use are stored on the domestic local database server 52.

The image processing server 53 is a server for executing the electronic fitting service for providing a customer with a fitting image when the user tries a designated piece of garment by performing the image composition on the basis of the garment image data and the body image data of the user by computer graphic processing. The image processing server 53 generates fitting images of a plurality of poses of the user, and further performs geometric transformation such as rotation, enlargement, reduction or the like of the fitting image, and also generation of an animation in which the customer moves by trying the garment, etc.

The access point 54 is equipped with a wireless LAN in accordance with IEEE 802.11b or the like, or short distance radio communication means in accordance with Bluetooth (a trademark) or the like, and the access point 54 is used for, for example, the wireless connection of the portable fitting apparatus 10 held by a user in his or her home with the domestic LAN 50. For example, the access point 54 constantly transmits beacons to detect the portable fitting apparatus 10. Then, the access point 54 dynamically assigns a recognizable IP address to the detected portable fitting apparatus 10 by means of DHCP or the like for making the portable fitting apparatus 10 connectable with the domestic LAN 50. If the domestic LAN 50 and the portable fitting apparatus 10 both correspond to IPV 6, it is possible to connect the portable fitting apparatus 10 to the domestic LAN 50 without dynamically assigning the IP address.

It is to be noted that, although only one domestic LAN 50 is shown in Fig. 1, actually innumerable homes or houses are distributed in various locations of the whole area. Consequently, it is expected to be understood that many domestic LAN's exist on the computer network 1.

Moreover, in Fig. 1, the local database server 52 and the image processing server 53 are drawn as if they were different computers, but it is needless to say that a single computer may be equipped with the server functions of both the servers 52 and 53. Besides, the gateway 51 is preferably configured as a computer independent of the local database server 52 or the image processing server 53 in consideration of security. As a matter of course, one computer may be equipped with two or more server functions.

The portable fitting apparatus 10 is composed in the form of a small information processing terminal such as a personal digital assistant (PDA) and the like, and is equipped with an arithmetic function for processing a synthesized fitting image and a display for displaying the synthesized fitting image.

Moreover, the portable fitting apparatus 10 is preferably equipped with a wireless LAN in accordance with IEEE 802.11b or the like, or short distance radio communication means in accordance with Bluetooth or the like. In such case, the portable fitting apparatus 10 can be connected with the retail LAN 20 through the access point 24 installed on the retail LAN 20, or can be connected with the domestic LAN 50 through the access point 54 installed on the domestic LAN 50. Moreover, the portable fitting apparatus 10 can be connected with the Internet through the gateway 21 or 51 of each of the LAN's 20 and 50. Alternatively, the portable fitting apparatus 10 may be equipped with a portable telephone function in accordance with Personal Digital Cellular (PDC) or the like for enabling the connection with the Internet 60 through a portable telephone network and a public telephone network (both of them are not shown).

### B. GARMENT ID

In the present preferred embodiment, identification information (ID) is assigned to each of the garment displayed in a boutique for managing garment data to be used for the composition of a fitting image. The garment ID is exhibited in a format such as a one-dimensional bar code, a two-dimensional bar code, a cyber code, radio frequency ID (RF-ID), or the like (as described above). Moreover, the portable fitting apparatus 10 is equipped with ID reading function for reading identification information (ID) attached to garment in a store such as a boutique or the like.

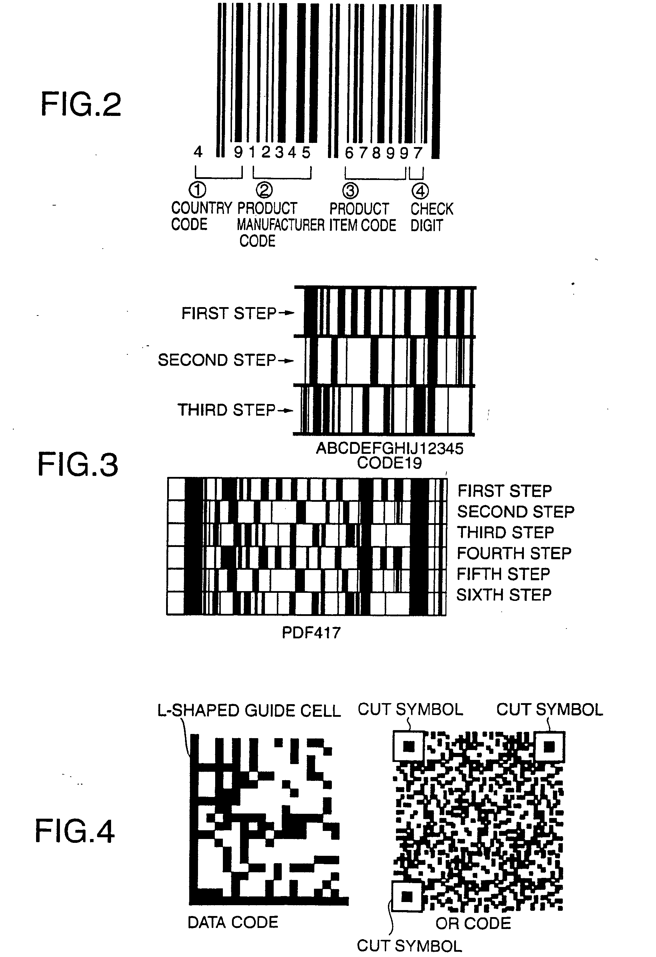

Hereupon, the one-dimensional bar code includes bar codes that are disposed in a straight line in accordance with Japan Article Number (JAN) code, Interleaved Two of Five (ITF) code, or the like (as illustrated, for example, in Fig. 2).

Moreover, two-dimensional bar code means a bar code display system having information in horizontal directions and vertical directions, or in two-dimensional directions. A two-dimensional code scanner as the ID reading means is required to read two-dimensional codes by recognizing them as a plane. The two-dimensional codes are roughly classified into a stack format and a matrix format (for example, as shown in http://www.barcode.co.jp/barcode/2-toku-syu.html).

The stack format is a format of one-dimensional bar codes stacked vertically for displaying information in vertical directions and horizontal directions. The format is a structure in which the one-dimensional bar codes are reduced and stacked vertically to constitute a plurality of steps (as shown in Fig. 3). Symbols are expressed by thin bars and thick bars (or thin spaces and thick spaces) like the one-dimensional bar code, and the method for reading them is similar to that of the one-dimensional bar codes.

On the other hand, the matrix format is a format of bar codes displaying information in a mosaic-like format in vertical directions and horizontal directions with alternating black and white squares (or cells) (as shown in Fig. 4). For discrimination of data columns, a start mark and a stop mark are attached to each column. And bar codes of the matrix format are decoded as data when all columns have been read independent of what column the reading has started from.

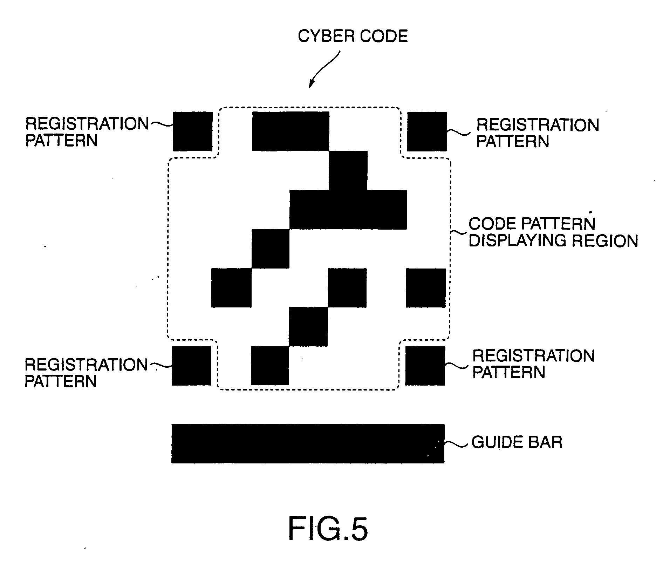

A cyber code is a type of two-dimensional bar code. As shown in Fig. 5, a cyber code includes a "guide bar displaying region" for indicating the existence of the cyber code and a "code pattern displaying region" for displaying a two-dimensional code pattern. The code pattern displaying region is composed of cells disposed as an n × m matrix (7 × 7 in the figure). Identification information can be given by the binary expression of each cell with black and white. It is to be noted that the corner cells at the four corners of the code pattern displaying region are always made to be black patterns not as identification information but as registration patterns. A recognition procedure of a cyber code is roughly divided into the step of binary-coding of a captured image, the step of discovering a candidate of a guide bar in the binary image, the step of searching for corner cells on the basis of the position and the direction of the guide bar, and the step of decoding an image bit map pattern in response to the detection of the guide bar and the corner cells. Furthermore, by the execution of the examination of error bit, it becomes possible to verify that the captured image includes a correct cyber code and to derive the identification information and the position information of the code. Moreover, it is possible to calculate the distortion caused by the inclinations of a camera or an object on the basis of the positions of the corner cells and to compensate them.

Details of the cyber code are also disclosed in, for example, Japanese Laid-Open Patent Publication No. 2000-82108 ("Two-Dimensional Code Identification Processing Method, Two-Dimensional Code Identification Processing Apparatus, and Medium"), which has already been assigned to the present applicant.

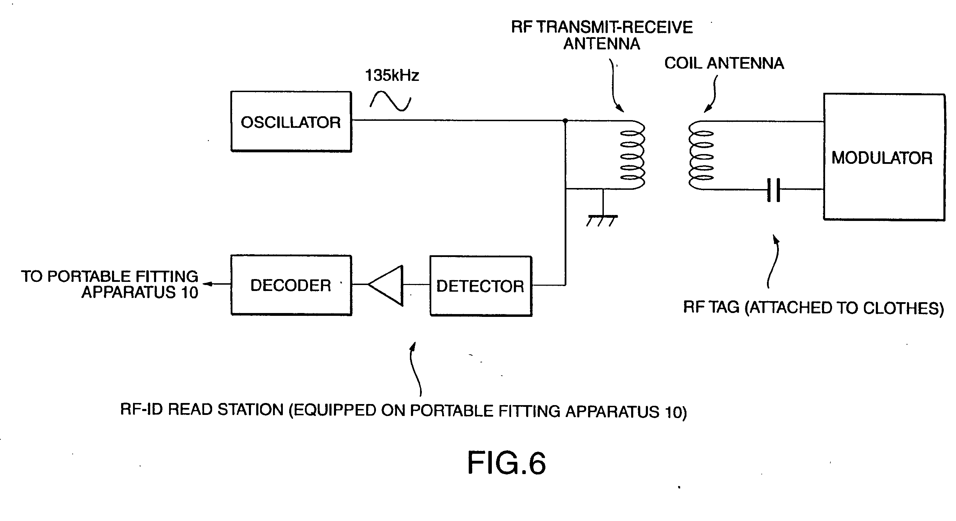

The radio frequency ID (RF-ID) is used as a combination of an RF tag attached to garment and an RF-ID read station for reading ID from the RF tag. A functional block diagram for the illustration of the operation of the reading of RF-ID from an RF tag is shown in Fig. 6. In the example shown in the figure, an electromagnetic transfer method is employed for radio transmission and reception. It is preferable that the RF tag bearing ID information is attached to garment and the read station for reading the RF-ID from the RF tag is installed in the portable fitting apparatus 10.

The RF-ID read station on the side of the portable fitting apparatus 10 amplifies the radio waves that have been oscillated by an oscillator and have a specific frequency (135 kHz in the figure), and the RF-ID read station outputs the amplified radio waves through an RF transmit-receive antenna. On the other hand, because the RF tag approaches to the RF transmit-receive antenna as a result of holding up the portable fitting apparatus 10, the RF tag can receive the radio waves. Then, a coil antenna in the RF tag stores resonance energy by resonating with the received radio waves. A modulator is driven by electric energy obtained by the conversion of the stored resonance energy. The modulator performs the modulation processing (e.g. amplitude modulation (AM)) of the received radio waves, and generates a signal of the modulation frequency corresponding to the ID assigned to a piece of garment to output the signal through the coil antenna. The RF transmit-receive antenna receives the radio waves having the modulation frequency from the RF tag, and a decoder decodes the identification information (RF-ID) assigned to the modulation frequency.

For the realization of the present invention, the format for the expression of garment ID is not especially limited, and the format may express the garment ID by means of any system of a one-dimensional bar code, a two-dimensional bar code, a cyber code and RF-ID. Or, a system other than the aforesaid systems may be employed.

In this connection, in the apparel industry, source marking based on JAN code, being a one-dimensional bar code and one of total standard bar codes, has been executed since 1993 for the promotion of quick responses (QR) as a measure of the modernization of the industry. At the present time, the apparel industry is in a period of transition to a system utilizing two-dimensional codes such as a QR code, a PDF code or the like.

### C. ELECTRONIC FITTING SERVICE

On the computer network 1 according to a preferred embodiment of the present embodiment, a user may use the electronic fitting service from anywhere by making the portable fitting apparatus 10 held by the user, the table type display 42 in a restaurant, or the like cooperate with the image processing server 23 in a retail shop, and then the user may look at a fitting image, composed or synthesized as if the user tried a specific piece of garment, regardless of location.

For example, by having an organic EL display on a table at a café restaurant, the user may talk with friends while appreciating the information concerning garment that the he/she could not try on in a boutique in a relaxed mood in the café on a screen larger than that of a PDA. It is also possible for the user to return to the boutique for purchasing an article he/she has found interesting during his/her conversation at the café. Alternatively, the user may also enjoy online shopping by connecting with the Internet 60 through the PDA or the table type display 42. Upon setting a store number to correspond to a specific retail shop or store providing original piece of garment, it becomes possible to provide to the retail shop a motivation to participate in the shopping style utilizing the electronic fitting service.

The electronic fitting service provided on the computer network 1 according to the present embodiment has the following features.

### (1) SPOT ORIENTED:

The electronic fitting service may provide access to garment data related to a piece of garment that has caught the user's attention at a store by simply acquiring the ID of the requested piece of garment.

### (2) IMMEDIACY:

The electronic fitting service can acquire garment data from a database by accessing, for example, a network in the store. Then, three-dimensional garment images are synthesized or composed so that fitting images can be displayed very fast.

### (3) REALISM:

Even if the electronic fitting service has a small screen, fitting images may be displayed to an extent in which customers can grasp a fitting image.

### (4) PRIVACY PROTECTING:

The electronic fitting service protects personal data such as body images of customers and the like by storing the personal data in a removable medium (which will be described later) having data access protecting function, such as a memory stick (a trademark) device or the like.

### (5) REPRODUCIBILITY:

A customer can store accessed garment data for a predetermined period of time and can verify fitting images later again.

### (6) ENTERTAINMENT:

The electronic fitting service permits changing the shapes of image such as fitting images. For example, if a user selects a shirt, the service provides the function of displaying a necktie and a suit that would fit to the shirt in combination, the function for the customer's own designing of colors and patterns, and the like for increasing customer's entertainment.

### (7) REAL TIME ACCESSIBILITY:

The electronic fitting service can provide real time interaction through fitting images.

### (8) INTERACTIVITY:

In the electronic fitting service, a customer can take the lead in controlling the display forms of fitting images.

### (9) SUPER REALITY:

Images and sounds that cannot be actually experienced are made to look as if they actually existed.

An overall flow of the electronic fitting composition and displaying service is described below.

A user visits a boutique displaying garment, holding the portable fitting apparatus 10 with him or her. When the portable fitting apparatus 10 reads information ID 25 attached to a piece of garment exhibited in the boutique, the portable fitting apparatus 10 accesses the local database server 22 connected to the retail LAN 20. Then, the portable fitting apparatus 10 may verify ID 25 and read the garment image data corresponding to ID 25. The garment image data is not limited to the data of a static image hereupon, but may include the data of a moving picture such as an animation. Moreover, the image data may be either of two-dimensional image data or three-dimensional image data.

If the image data of the corresponding piece of garment are not stored in the local database server 22 on the retail LAN 20, it is also possible that the portable fitting apparatus 10 downloads the image data of the piece of garment corresponding to ID 25 to the local database server 22 by accessing the remote database server 32 connected to the data center LAN 30 through the gateway server 21. Now, it is desirable to form a virtual private network (VPN) between the gateway 21 and the gateway 31 in consideration of the safety of transferring data such as the protection of copyrights and other rights connected with content utilization, and the like.

Next, the personal image data that are made on the basis of the body shape data of an individual user or are made on the basis of captured full-length figure data, and the garment image data retrieved corresponding to ID 25 are taken into the image processing server 23. Then, the retail LAN 20 is configured to display the result of the image composition of the taken personal image data and the garment image data on the display on the portable fitting apparatus 10 or on the display device (or a monitor display such as a personal computer (PC) monitor, a television (TV) receiver, a mirror type display or the like) 26 installed in the boutique.

The personal body shape data or the captured full-length figure data to be used for the composition of a fitting image are stored in any one of the portable fitting apparatus 10, the local database server 22 on the retail LAN 20, the remote database server 32 on the data center LAN 30 and the local database server 52 on the domestic LAN 50.

The personal body shape data and the captured full-length figure data are personal information, and there is the possibility that the privacy of the user may be infringed if data is leaked out without permission. Accordingly, it is desirable that the personal body shape data and the captured full-length figure data are encoded or encrypted and then stored in view of privacy protection. Moreover, if the body shape data and the captured full-length figure data are stored in the local database server 52 on the domestic LAN 50, it is desirable to form a VPN between the portable fitting apparatus 10 and the gateway 51, and to download the data from the local database server 52 to the portable fitting apparatus 10 once, and further to transmit the downloaded personal data from the portable fitting apparatus 10 to the image processing server 23 again.

Moreover, another embodiment of the present invention is configured as follows, in order to further strengthen the privacy protection related to personal data. In other words, after the portable fitting apparatus 10 has read the information of ID 25 attached to a piece of garment in a boutique, the portable fitting apparatus 10 accesses the local database server 22 connected with the retail LAN 20 so as to read out the image data of the piece of garment corresponding to ID 25. The read out garment image data are transmitted to the portable fitting apparatus 10. Consequently, the personal data remains stored in either of the portable fitting apparatus 10 or the domestic local database server 52, in both of which the privacy is secured, and thereby the personal data are not supplied to the outside.

It is more preferable to reduce chances of access to personal data from the outside as much as possible by storing the personal data in a semiconductor memory or a solid-state record medium, for example, installed in the portable fitting apparatus 10 and capable of being accessed for reading out the stored data. Moreover, as for enhancing the privacy security , it is preferable to limit users, processes, tasks, applications and the like through which the personal data is accessed.

A user of the portable fitting apparatus 10 is permitted to hold synthesized fitting image data or garment data corresponding to the fitting image data, being stored in a storage region that can be read and written by the portable fitting apparatus 10 according to demand.

Hereupon, garment data correspond to a primary product in the copyright law, and fitting image data formed by the composition of the garment data and personal data (such as body shape data and captured full-length figure data) of a user correspond to a secondary product. Accordingly, it is preferable that the portable fitting apparatus 10 is equipped with a measure for managing a right for holding or utilizing the products.

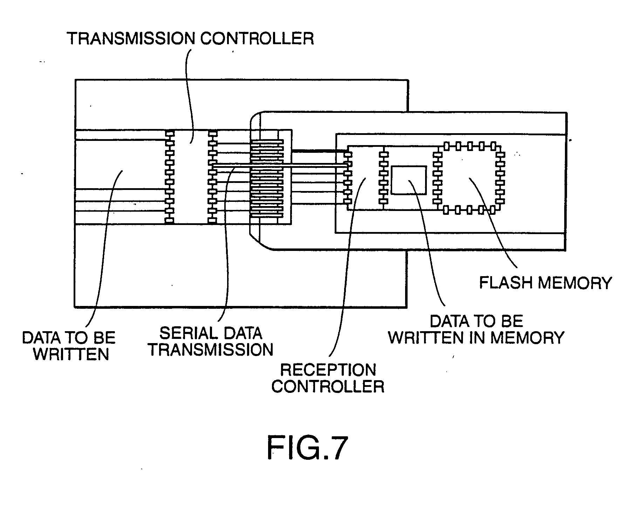

Although the details of an example of the product management will be described later, the management can be realized by configuring the system to be able to record products having copyrights only on a removable record medium provided with a product protection mechanism, and to be able to use the products in accordance with the utilization conditions provided in association with the products. An example of removable storage medium is a semiconductor memory such as a memory stick (a trademark) compatible with MG-R of Sony Corp. Fig. 7 shows an example of internal structure of an MG-R compatible memory stick device. A memory stick is a cartridge type device utilizing a flash memory as a record medium. If there are data desired to be written in a memory stick on the side of the main body of the portable fitting apparatus 10, the data are first transferred to the transmission controller of a memory slot via a system bus. Then, the transmission controller serially transmits the data to be written to a reception controller on the side of the memory stick. The reception controller executes the reception processing of the data to be written, and then writes them at a predetermined address in the flash memory.

If the data related to a product are stored and no conditions concerning the use of the data are set, such a situation may be overcome by the application of a delivery system in which the product does not remain on the portable fitting apparatus 10 through which the fitting images are enjoyed. For example, personal data can also be watched as follows. That is, the personal data are transmitted from the portable fitting apparatus 10 or the domestic local database server 52 to the image processing server 23 first. Then, the image composition of the transmitted personal data with the garment data corresponding to ID 25 is performed, and the synthesized data are compressed by the use of an image compression system such as Moving Picture Experts Group (MPEG) 2, MPEG 4, MPEG 7 or the like. After that, the compressed data are delivered to the portable fitting apparatus 10 by the method of the streaming, and thereby the delivered data can be listened and looked at with an MPEG player on the portable fitting apparatus 10. Because the data reproduced by an MPEG player do not remain if the data are delivered by the streaming, there is no possibility that the product is used without permission after that.

Moreover, as a further preferred embodiment of the present invention, if a user does not satisfy a specific condition concerning the usage of a product, such a situation can be overcome by the installation of software having a copyright protection function equipped with a measure for not making read data reusable to the portable fitting apparatus 10. That is, by the operation of the software having the copyright protection function, it is also possible to make a user listen and look at a synthesized fitting image in a status of being impossible to reuse a synthesized fitting image by transmitting garment data from the local database server 22 in a boutique or the like to the portable fitting apparatus 10, and by synthesizing the transmitted garment data with personal image data (such as body shape data and captured full-length figure data) in the portable fitting apparatus 10.

If garment data or synthesized fitting image data are recorded on a removable record medium having a product protection function such as the MG-R compatible memory stick, a synthesized fitting image can be observed by the use of a record medium reader and the display 42 (e.g. a table type display, a wall surface display, an electronic paper, or the like) installed in a restaurant. Hereupon, it is desirable that the record medium reader and the display 42 (with at least a built-in CPU, a graphic server and a storage device) are configured so as to be incorporated into a table, for example.

Moreover, if necessary, it is possible that a user operating the table type display 42 performs connection with the system in the boutique, the system including managing rights of garment data, through the restaurant LAN 40, or performs the retrieval of related data or connection with a net sales system (not shown) through a relating information provider (not shown) on the Internet 60. Furthermore, it is needless to say that the user can access the user's own domestic LAN 50 through the restaurant LAN 40 and the Internet 60.

### D. STRUCTURE OF A PORTABLE FITTING APPARATUS

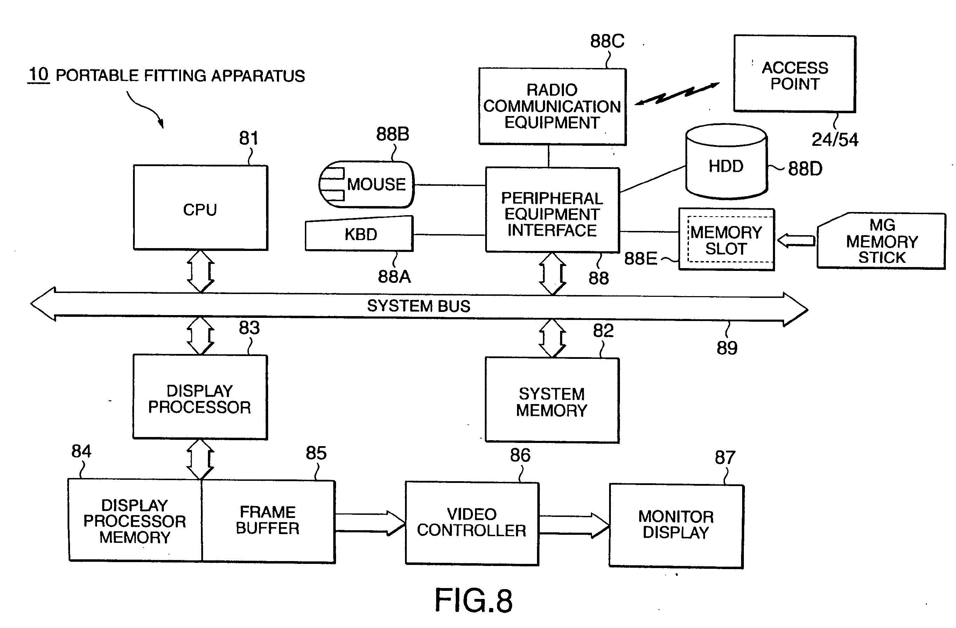

Fig. 8 schematically illustrates an example of the internal hardware configuration of the portable fitting apparatus 10 applicable to the computer network 1 according to the present preferred embodiment of the invention. The portable fitting device 10 shown in the figure is configured as peripheral display and processor built-in raster display system architecture.

A central processing unit (CPU) 81 being a main controller of the system of the portable fitting apparatus 10 executes various applications under the control of an operating system (OS). For example, an application for client processing in the electronic fitting service according to the present embodiment is executed by the CPU 81.

As shown in the figure, the CPU 81 is connected to another equipment (that will be described later) by means of a system bus 89. A specific memory address or an input-output (I/O) address is respectively given to each equipment on the system bus 89. The CPU 81 can access each equipment on the system bus 89 based addresses thereof.

A system memory 82 is used for the loading of programs (such as application programs, graphics packages and operating systems), which are executed on the CPU 81, and for the holding of operation data for the execution of them. Hereupon, the system memory 82 is composed of a read only memory (ROM), a random access memory (RAM) or a combination of them.

A display processor 83 is a processor for the exclusive use of executing graphics functions such as scan conversion, raster processing and the like independently of the CPU 81.

A display processor memory 84 is used for holding program codes for executing scan conversion and raster processing on the display processor 83 and operation data of the program codes.

A frame buffer 85 is a memory for image-refreshing, being independent of the system memory 82, for temporarily holding displayable image data generated by scan conversion and raster processing on the display processor 83 at every frame.

A video controller 86 controls display driving on the monitor display 87 to display image data stored temporarily in the frame buffer 85 on a monitor display 87. The monitor display 87 is composed of, for example, a liquid crystal display (LCD), a cathode ray tube (CRT) display, an organic EL display, or the like.

A peripheral equipment interface 88 is an interface device for connecting various pieces of peripheral equipment with the system bus 89. Hereupon, the peripheral equipment includes a keyboard 88A, a mouse 88B, a user input device in another form, radio communication equipment 88C for changing radio data between the access points 24/54, an external storage device such as a hard disk drive 88D or the like, a memory slot 88E for the removable installation of a portable semiconductor memory device such as a memory stick, and the like.

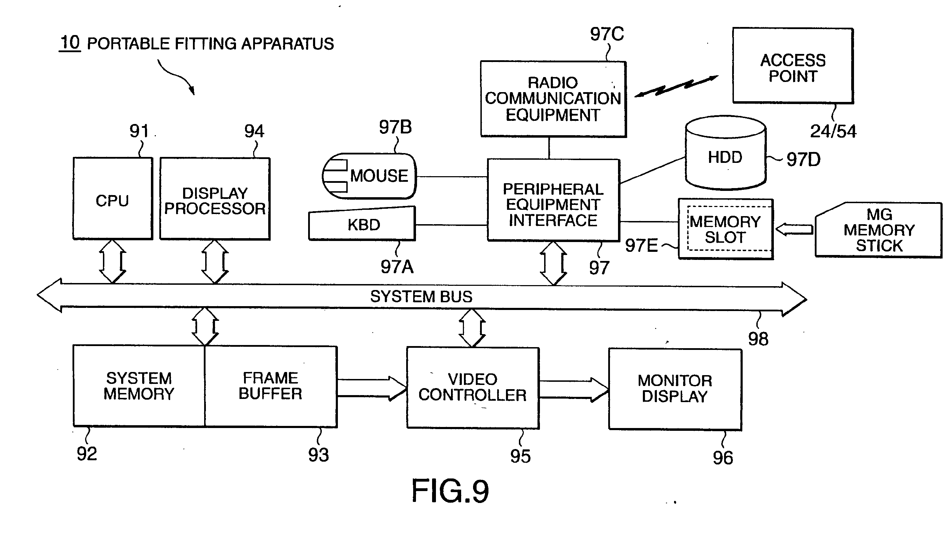

Moreover, Fig. 9 schematically illustrates another example of the internal hardware configuration of the portable fitting apparatus 10 applicable to the computer network 1 according to the present embodiment. The portable fitting apparatus 10 shown in the figure is configured as raster display system architecture.

A central processing unit (CPU) 91 being the main controller of the system of the apparatus 10 executes various applications under the control of an operating system (OS). For example, an application for client processing in the electronic fitting service according to the present embodiment is executed by the CPU 91.

As shown in the figure, the CPU 91 is connected to other equipment (that will be described later) by means of a system bus 98. A specific memory address or an I/O address is respectively given to each equipment on the system bus 98. The CPU 91 can access each equipment on the system bus 98 based on addresses thereof.

A system memory 92 is used for the loading of programs (such as application programs, graphics packages and operating systems), which are executed on the CPU 91, and for the holding of operation data for the execution of them. Hereupon, the system memory 92 is composed of a read only memory (ROM), a random access memory (RAM) or a combination of them.

A display processor 94 is a processor for the exclusive use of executing graphics functions such as scan conversion, raster processing and the like independently of the CPU 91.

A video controller 95 controls display driving on the monitor display 96 to display image data stored temporarily in the frame buffer 93 on a monitor display 96. The monitor display 96 is composed of, for example, a liquid crystal display (LCD), a cathode ray tube (CRT) display, an organic EL display, or the like.

In the configuration example shown in Fig. 9, a single address space method is employed, and thereby a frame buffer 93 for holding image data generated by scan conversion and raster processing is made to be a part of the system memory 92. Consequently, all of the CPU 91, the video controller 95 and the display processor 94 can access the system memory 92.

Moreover, because the video controller 95 is made to include a dual port in the example of configuration shown in Fig. 9, the video controller 95 may access the frame buffer 93 without restraining the system bus 98. Another possible method by which the system bus 98 is not restrained is, for example, to configure the CPU 91 to have an instruction cache memory or a data cache memory. Moreover, the display processor 94 may be configured to have a memory for the excusive use of the processing of algorithm or storage within.

A peripheral equipment interface 97 is an interface device for connecting various pieces of peripheral equipment with the system bus 89. Hereupon, the peripheral equipment includes a keyboard 97A, a mouse 97B, a user input device in another form, a radio communication equipment 97C for changing radio data between the access points 24/54, an external storage device such as a hard disk drive 97D or the like, a memory slot 97E for the removal installation of a portable semiconductor memory device such as a memory stick, and the like.

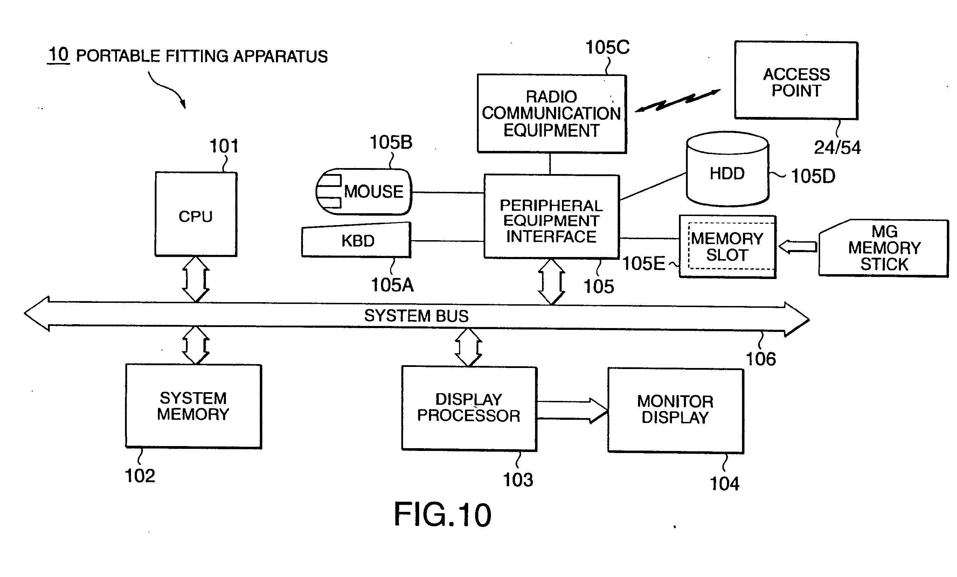

Moreover, Fig. 10 schematically illustrates further example of internal hardware configuration of the portable fitting apparatus 10 applicable to the computer network 1 according to the present embodiment. The portable fitting device 10 shown in the figure is configured as vector (random scan) display system architecture.

A central processing unit (CPU) 101 being the main controller of the system of the apparatus 10 executes various applications under the control of an operating system (OS). For example, an application for client processing in the electronic fitting service according to the present embodiment is executed by the CPU 101.

As shown in the figure, the CPU 101 is connected to other equipment (that will be described later) by means of a system bus 106. A specific memory address or an I/O address is respectively given to each equipment on the system bus 106. The CPU 101 can access each equipment on the system bus 106 based on addresses thereof.

A system memory 102 is used for the loading of programs (such as application programs, graphics packages and operating systems), which are executed on the CPU 101, and for the holding of operation data for the execution of them. Hereupon, the system memory 102 is composed of a read only memory (ROM), a random access memory (RAM) or a combination of them.

A display processor 103 is a processor for the exclusive use of executing graphics functions such as scan conversion, raster processing and the like independently of the CPU 101.

In the example shown in Fig. 10, the display processor 103 is called as a "display processing unit (DPU)", a "graphics controller" or the like. The display processor 103 is equipped with an instruction set and an instruction address register, and executes typical processing such as instruction readout (decode), execute cycle and the like as an ordinal computer. Because such a kind of the display processor 103 does not include any pixmap, it is desirable to execute a program from thirty to sixty times per second for making it possible to generate a display output without any flicker. The programs to be executed by the display processor 103 are normally stored in the system memory 102 owned by the CPU 101 and the display processor 103 in common. The display processor 103 may be configured to have a memory for the exclusive use of the programs to be stored therein.

It is to be noted that display processors are generally configured to be divided into a geometric subsystem block and a raster processing block respectively to be able to perform pipeline processing for making the speed of rendering calculations higher.

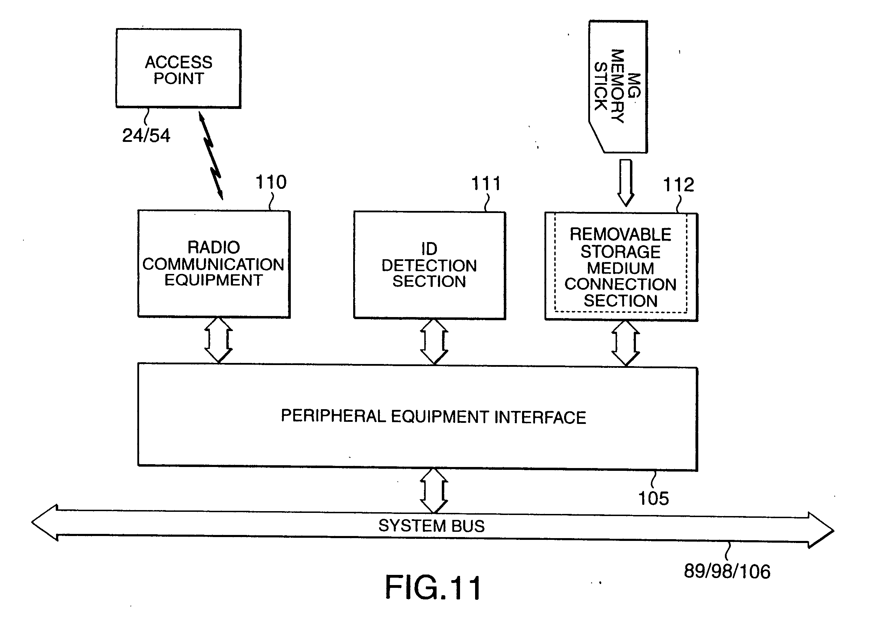

Fig. 11 shows the peripheral equipment to be connected to the peripheral equipment interface 88, 97 or 105 of the portable fitting apparatus 10. The pieces of peripheral equipment necessary at a minimum for realizing the present invention suitably are a radio communication section 110, an ID detection section 111 and a removable storage medium connection section 112. However, as it has been described with reference to Figs. 8-10, the portable fitting apparatus 10 may be equipped with, for example, a user input device, an external storage device and the like as the peripheral equipment.

The radio communication section 110 is equipped with a hardware configuration conforming to a communication system complying with radio standards, established by Federal Communication Commission (FCC), such as IEEE 802.11b, Bluetooth (a trademark) and Ultra Wide Band (UWB).

The ID detection section 111 is equipped with a hardware configuration such as a bar code reader, an image recognition device, an RF-ID reader or the like for reading the garment ID expressed in the format such as a one-dimensional bar code (see Fig. 2), a two-dimensional bar code (see Figs. 3 and 4), a cyber code (see Fig. 5), an RF-ID or the like. Or, the ID detection section 111 may be equipped with the hardware such as a bar code reader changing a two-dimensional or three-dimensional bar code like an animation or in the way of time series.

The removable storage medium connection section 112 is equipped the hardware capable of installing a removable storage medium 113 such as a flash memory (for example, a memory stick (see Fig. 7) that Sony Corp. has developed and is manufacturing, SD Memory Card that San Disk Corp., Matsushita Electric Industrial Co., Ltd. and Toshiba Corp. have developed, and the like). The equipped hardware can also access to a memory for reading and writing.

Moreover, there is also the case in which the removable storage medium connection section 112 may include an encoding section and a decoding section correspondingly to the removable storage medium 113 (for example, Magic Gate (MG) Memory Stick (see Fig. 7) of Sony Corp., SD Memory Card, or the like) equipped with a copyright protection function. For example, SD Memory Card conforms to Secure Digital Music Initiative (SDMI) being at a security level required for a music delivery system, and employs Content Protection for Recordable Media (CPRM) advocated by four companies (4 C entity LLC) of IBM Corp., Intel Corp., Matsushita Electric Industrial Co., Ltd. and Toshiba Corp. as its copyright protection mechanism. In this case, the removable storage medium connection section 112 includes a CPRM encoding section (not shown).

MG memory stick also has a copyright protection function conforming to the SDMI standards. If the portable fitting apparatus 10 is made to correspond to the MG memory stick 113, the removable storage medium connection section 112 corresponding to the MG memory stick 113 is equipped with a hardware circuit for the exclusive use of performing the authentication and the encryption of being copyright protection compatible, and the system memory 82, 92 or 102 has an individual "key" (or equipment ID 1) normally. The equipment ID may be stored in the excusive use memory in the exclusive use hardware circuit in the removable storage medium connection section 112. Moreover, the key (or equipment ID 2) of a memory stick is stored also in the memory in the MG memory stick 113. When the CPU 81, 91 or 101 accesses the MG memory stick 113 (for reading or writing data), the hardware for the authentication reads out the equipment ID 1 from the system memory 82, 92 or 102, and reads out the equipment ID 2 from the MG memory stick 113. Thereby it is authenticated that the portable fitting apparatus 10 and the MG memory stick 113 are connected with each other in a not illegal manner. That is, in this case, the removable storage medium connection section 112 includes the hardware circuit for the excusive use of executing authentication and encryption, and is configured to perform the authentication at the time of installation of the removable storage medium 113 to the removal storage medium connection section 112.

It is to be noted that, programs such as device drivers and service software corresponding to each of the three hardware blocks shown clearly in Fig. 11 are normally stored in the system memory 82, 92 or 102. It is needless to say that the CPU 81, 91 or 101 is configured to execute the services utilizing respective hardware blocks by the use of the programs.

Moreover, Fig. 8 to Fig. 11 show only essential hardware configuration elements of the present invention. That is, it is needless to say that various circuit components that a person skilled in the computer hardware art can think of should be supplied for the complete operation of the system.

Moreover, the configurations shown in Fig. 8 to Fig.10 can be applied not only to the portable fitting apparatus 10, but also to the image processing server 23 or 53, or the table type display 42. Furthermore, the image processing server 23 or 53 is generally equipped with a large capacity (more than several GB) hard disk drive (HDD) as one of the devices connected with the peripheral equipment interface.

### E. PROCESSING ON PORTABLE FITTING APPARATUS

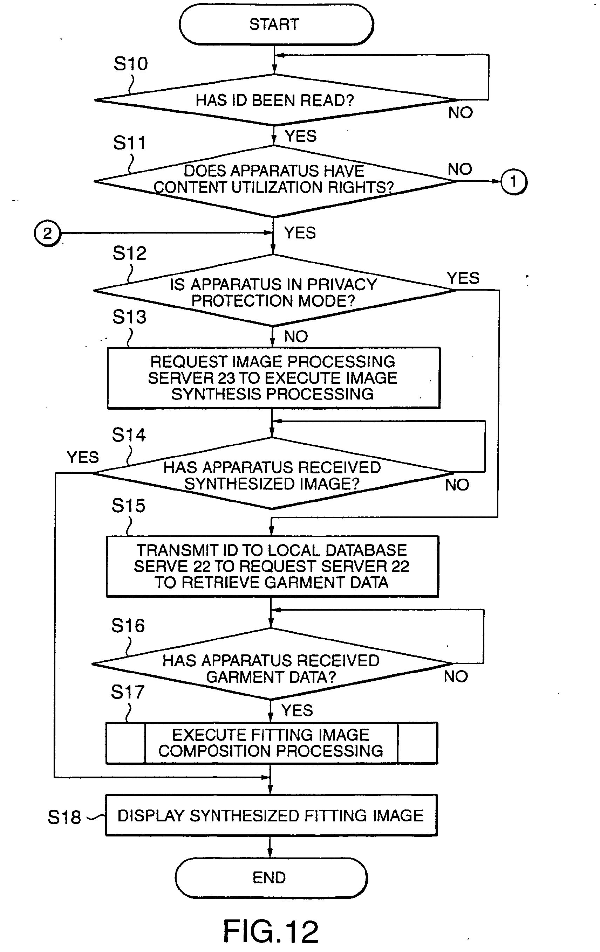

Next, Fig. 12 shows the operation of the portable fitting apparatus 10 related to the image composition processing of image data of fitting objects (or wearable things such as glasses, wigs, accessories and the like besides garment) in a boutique or the like with body image data in the format of a flowchart. The operation is actually realized in the format in which the CPU 81, 91 or 101 executes a predetermined service application. In the following, the flowchart shown in Fig. 12 is referred while the operation of the portable fitting apparatus 10 related to the image composition of garment image data with body image data is described in detail.

At first, the portable fitting apparatus 10 checks whether the ID of a piece of garment subject to fitting is read or not at Step S10.

In the present embodiment, the portable fitting apparatus 10 is equipped with ID reading means (as shown in Fig. 11). For example, if the ID's are bar codes, the ID reading means is a bar code reader. If the ID's are originated by an active medium such as an RF-ID, the ID reading means is an RF-ID reader (as shown in Fig. 6). Moreover, the bar code may be a one-dimensional bar code (as shown in Fig. 2), a two-dimensional bar code (as shown in Fig. 3 or Fig. 4), a cyber code (as shown in Fig. 5), or a one-dimensional or two-dimensional bar code changing like an animation or in the way of time series.

Next, at Step S11, the portable fitting apparatus 10 checks whether the image data (or two-dimensional data or three-dimensional data) connected with a commodity indicated by the ID is permitted to be used secondarily by beings stored in the recording means of the personal terminal of a user or not, namely whether the portable fitting apparatus 10 has a product utilization rights of the image data or not if the image data is regarded as a product.

Such checking of a product utilization rightss is performed to, for example, a semiconductor memory equipped with a copyright protection mechanism. The checking may be performed in a format for checking whether the right information for enabling the reading and the writing of the product data concerned with the commodity of the ID is recorded in the semiconductor memory or not.

If the portable fitting apparatus 10 is judged to have a product utilization rights at Step S11, the processing of the apparatus 10 advances to Step S12. At Step S12, the portable fitting apparatus 10 downloads the image data corresponding to the ID or synthesized image data synthesized by the use of the image data, and the apparatus 10 performs the processing for storing the downloaded data in storage means (for example, a flash memory) having a product protection mechanism for utilizing the stored data.

At Step S12, first, it is verified whether the present mode is a privacy protection mode or not.

The "privacy protection mode" in this context is the setting of whether another computer is made to be able to read personal data or not. That is, in case of the privacy protection mode, the other computers are prohibited from reading the personal data. On the contrary, in case of not in the privacy protection mode, the other computers are permitted to read the personal data.

If the portable fitting apparatus 10 is judged ,to be in the privacy protection mode at Step S12, the processing of the apparatus 10 advances to Step S15. At Step S15, the portable fitting apparatus 10 performs the procedure for executing the image composition processing for synthesizing fitting images. On the contrary, if the portable fitting apparatus 10 is not judged to be in the privacy protection mode, the processing of the apparatus 10 advances to Step S13. At Step S13, the apparatus 10 performs the procedure for executing the image composition processing for synthesizing (composing) the fitting images with a computer (for example, an expensive external device the image processing function of which is strengthened such as the image processing server 23) other than the portable fitting apparatus 10.

Hereupon, fist, descriptions are given to the case in which the portable fitting apparatus 10 is not in the privacy protection mode. In this case, the apparatus 10 permits external computers for performing image composition processing to read personal data and the processing of the apparatus 10 advances to Step S13. To put it more specifically, personal body data, captured personal body image data or the like are transferred to, for example, the image processing server 23, and then the image processing server 23 synthesizes the body image data generated on the basis of the body data or the captured personal body image data with the garment image data corresponding to the ID detected at Step S10.

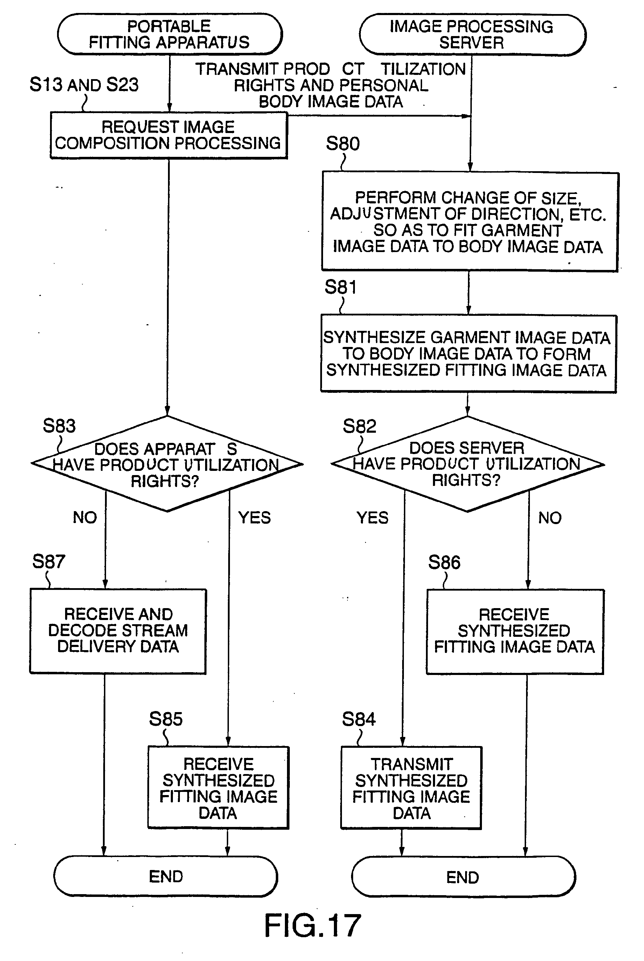

Accordingly, at Step S13, the portable fitting apparatus 10 requests the image processing server 23 to execute image composition processing. The processing of the image processing server 23 in response to the request will described later on the basis of Fig. 17 as the processing of the image processing server 23.

Next, at Step S14, the portable fitting apparatus 10 enters its standby mode until the apparatus 10 receives a synthesized image downloaded from the image processing server 23. When the apparatus 10 receives a synthesized image at Step S14, the processing of the apparatus 10 advances to Step S18. At Step S18, the apparatus 10 displays the received synthesized fitting image on the monitor display (such as a liquid crystal display, an electronic paper, an organic EL monitor or the like) equipped by the apparatus 10. Then, a series of synthesized fitting image display processing is terminated. Hereupon, the synthesized fitting image may be a two-dimensional image, a three-dimensional image or an animated image.

Step S12 and the case where the portable fitting apparatus 10 is judged to be in the privacy protection mode and the processing of the apparatus 10 advances to Step S15 is described. In such a case, it is made impossible to make an external computer read personal data. Accordingly, the portable fitting apparatus 10 does not output personal data such as body image data to the outside, but the apparatus 10 executes image composition processing for synthesizing a fitting image of a user in the apparatus 10 itself not in the image processing server 23.

It is necessary to download the garment image data corresponding to the ID detected at Step S10 for performing the fitting image composition. For this purpose, the portable fitting apparatus 10 transmits the garment ID detected from a desired piece of garment to the local database server 22 and requests the server 22 to transmit the garment image data corresponding to the ID to the portable fitting apparatus 10 at Step S15. Otherwise, it is also possible to use garment image data stored in the local database server 52 on the domestic LAN 50.

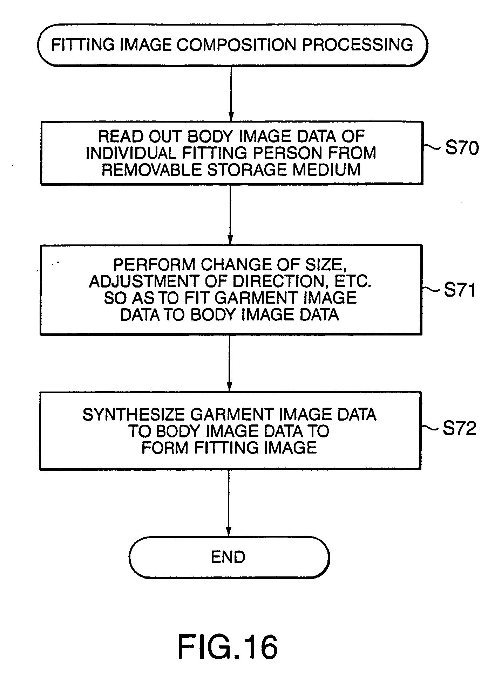

Next, at Step S16, the apparatus 10 enters into a standby mode for receiving the garment image data. When the apparatus 10 receives the garment image data, the processing of the apparatus 10 advances to Step S17. At Step S17, the apparatus 10 executes fitting image composition processing that is defined separately. The fitting image composition processing will be described later on the basis of Fig. 16 in detail. If the garment image data received on the domestic LAN 20 are equipped with a legal utilization rights, the apparatus 10 may also store the data in the local database server 52, and may use the data at the time of electronic fitting in the future again.

Finally, when the fitting image composition processing is terminated, the processing of the apparatus 10 advances to Step S18 like the step described above. At Step S18, the apparatus 10 displays a fitting image synthesized as if the user tried a piece of garment on. Hereupon, the synthesized fitting image may be a two-dimensional image, a three-dimensional image or an animated image.

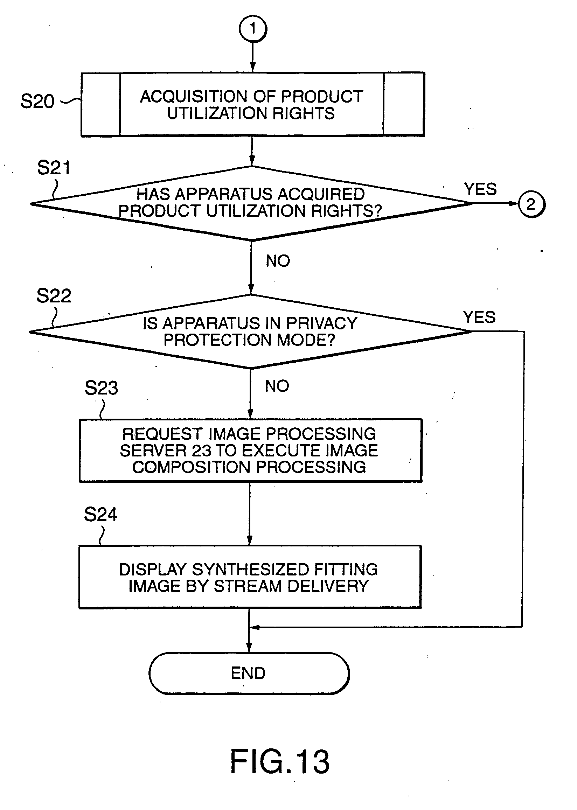

Now, if the portable fitting apparatus 10 is not judged to have a product utilization rights at Step S11, the processing of the apparatus 10 advances to the processing indicated by a numeral (1) through the branch of the judgment block at Step S11. Then, the processing is performed in accordance with the procedure of the flowchart shown in Fig. 13.

At first, at Step S20, "acquisition of product utilization rights" is performed. For the implementation of the present invention, the forms of the product utilization rights acquiring processing are not specifically limited. For example, an accounting procedure for obtaining product utilization rights of a portable fitting apparatus 10 held by a user from a boutique is performed through a network by means of an electronic commercial transaction or the like.

Successively, at Step S21, the user, or the portable fitting apparatus 10 of the user, judges whether the apparatus 10 has obtained the product utilization rights or not. If the apparatus 10 judges to have obtained the product utilization rights, the processing of the apparatus 10 advances to the procedure indicated by a numeral (2) through a branch YES. Then, the processing returns to Step S12 of the flowchart shown in Fig. 12.

On the contrary, if it is judged that the product utilization rights are not obtained at Step S21, the processing of the apparatus 10 advances to Step S22. In the procedure after Step S22, the processing for the looking of a synthesized image data by streaming is performed because the image data corresponding to the ID of a piece of garment appointed by the user cannot be downloaded in the form that the portable fitting apparatus 10 can use the image data secondarily.

At first, at Step S22, the checking of the privacy protection mode is performed like the processing at Step S12 shown in Fig. 12.

In the processing at succeeding Step S23, the portable fitting apparatus 10 requests the image processing server 23 to perform image processing like the case at Step S13 in Fig. 12. At this time, by the information of "not having product utilization rights" to the image processing server 23, the image processing server 23 transmits a synthesized fitting image by streaming after image composition. Or, the image processing server 23 transmits the synthesized fitting image in a transmission format in which the fitting image cannot be reused on the reception side. The processing at this step will be described by reference to Fig. 17.

Finally, at Step S24, the portable fitting apparatus 10 displays the received synthesized fitting image in real time by means of a software program corresponding to the streaming. Then, the operation of displaying synthesized fitting image of the product is terminated. Hereupon, the synthesized fitting image may be a two-dimensional image, a three-dimensional image or an image in the format of an animation.

In addition, the procedure for displaying a synthesized image in the case where the portable fitting apparatus 10 can use garment image data written in a removable storage medium (such as a semiconductor memory, an optical disk or the like) which can be installed in the fitting apparatus 10 and data can be read out and written in is described. In this case, it is supposed that storage means on the side of the portable fitting apparatus 10 holds personal data such as the body image data of a user. Consequently, the portable fitting apparatus 10 can perform the composition process of all fitting images solely without depending on any computer (such as the image composition server 23 or the like) other than the portable fitting apparatus 10.

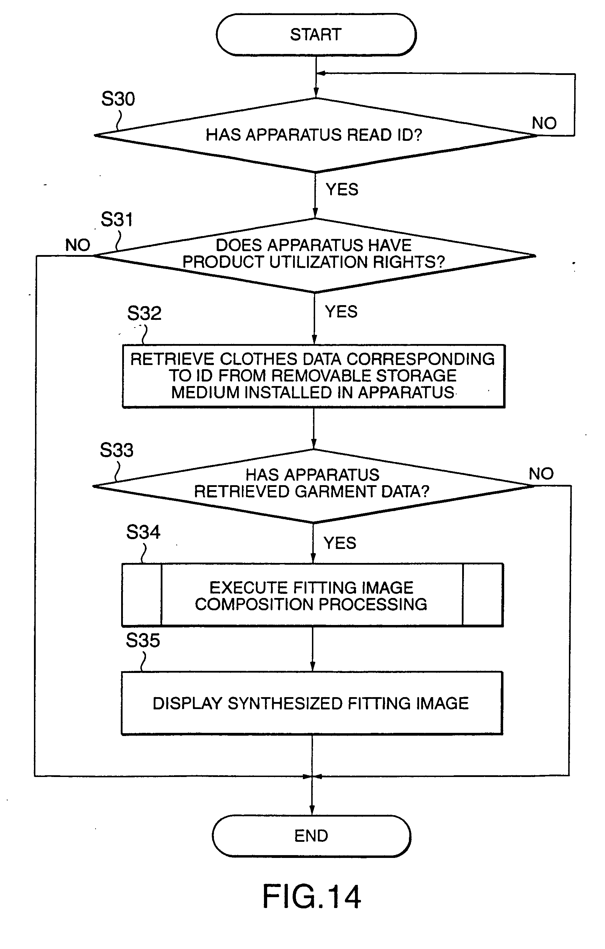

Fig. 14 shows flowchart of a procedure for displaying a synthesized image by the use of the garment image data written in a readable and writable removable storage medium. The procedure is implemented, for example, in a format in which the CPU 81/91/101 of the portable fitting apparatus 10 executes a predetermined service application. Hereinafter, the flowchart shown in the figure is referred to while the procedure is described.

The portable fitting apparatus 10 checks whether the ID of a piece of garment being a fitting object has been read in or not at Step S30. The portable fitting apparatus 10 is equipped with the ID reading means of the fitting object (as described above). If the ID is, for example, a bar code, the ID reading means is a bar code reader. Moreover, if the ID is originated by an active medium such as an RF-ID, the ID reading means is an RF-ID reader (see Fig. 6). Moreover, the bar code may be a one-dimensional bar code (see Fig. 2), a two-dimensional bar code (see Figs. 3 and 4), or a two-dimensional bar code or a three-dimensional bar code, both being changed like an animation or in the way of time series.

Next, at Step S31, the portable fitting apparatus 10 checks whether the image data (or two-dimensional data or three-dimensional data) connected with the commodity designated by the ID is permitted to be used secondarily by being stored in the storage means of a personal terminal or not, namely whether the apparatus 10 has a product utilization rights or not if the image data is regarded as a product.

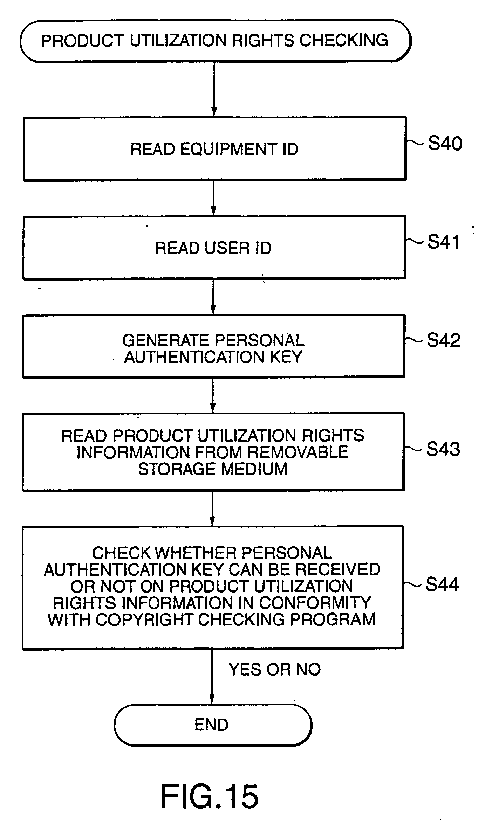

The checking of the product utilization rights is performed to, for example, a semiconductor memory having a copyrights protection mechanism such as an MG-R compatible memory stick device. That is, the checking is performed in a format for examining whether the information concerning a right enabling the writing and the reading of the product data related to the commodity designated by the ID is recorded in the semiconductor memory or not. In this case, if the ID is, for example, in the formats shown in Fig. 2 to Fig. 4, the checking of the product utilization rights is performed as phased examinations in accordance with the procedure (that will be described later) shown in the flowchart of Fig. 15.

At Step S31, if the portable fitting apparatus 10 is judged to have the product utilization rights, the processing of the apparatus 10 advances to Step S32. At Step S32, the portable fitting apparatus 10 retrieves the image data corresponding to the ID from the database in the removable storage medium installed in the apparatus 10.

If the portable fitting apparatus 10 judges that the garment image data corresponding to the detected ID have been retrieved at Step S33, the processing of the apparatus 10 advances to Step S34. On the contrary, if the apparatus 10 could not retrieve the garment image data, the whole processing routine is terminated at this stage. It is needless to say that the system may be configured to make the processing advance to Step S11 shown in Fig. 12 and continue the processing by a computer readable software program.

Next, at Step S34, fitting image composition (or synthesizing) processing is performed. The fitting image composition processing is processed in accordance with the procedure shown in the flowchart shown in Fig. 16. The processing will be described later.

At last, when the fitting image composition processing is completed, the processing of the apparatus 10 advances to Step S35. At Step S35, the apparatus 10 displays the synthesized fitting image on the monitor display of the apparatus 10. Hereupon, the synthesized fitting image may be a two-dimensional image, a three-dimensional image, or an animated image.

### F. CHECKING PROCESSING OF PRODUCT UTILIZATION RIGHTS

Successively, the checking processing of a product utilization rights is described. It is supposed that ID read by the portable fitting apparatus 10 is, for example, is a one-dimensional bar code in a JAN format (including country code, manufacturer code, product code, check digit) shown in Fig. 2.

Here, the JAN code is expressed by a thirteen-digit number, and is defined as follows. In other words:

### (1) COUNTRY CODE, two digits:

The codes of Japan are '49' and '45'.

### (2) MANUFACTURER CODE, five digits:

The code of the example is a company number performing the display of the JAN codes (as source marking), and the code is provided by making an application to Distribution Code Center through the Chamber of Commerce and Industry and Association of Commerce and Industry of Japan.

### (3) PRODUCT CODE, five digits:

The code is a code set and managed by a manufacturer on the basis of the differences in price, capacity, size, package form and the like. In case of apparels, also, the code is set by each color and size. Up to one hundred thousand items can be set for each manufacturer code.

### (4) CHECK DIGIT, one digit:

The code is to prevent read errors, and the calculation formula thereof is defined by Japanese Industrial Standard (JIS), in the case of the illustrated example.

Fig. 15 shows a procedure for checking whether the portable fitting apparatus 10 has product utilization rights connected with garment data or not in the format of a flowchart. The procedure is implemented in, for example, a format in which the CPU 81/91/101 of the portable fitting apparatus 10 executes a predetermined service application. Hereinafter, the flowchart shown in the same figure is referred to while the checking processing of a product utilization rights is described.

First, at Step S41, the equipment ID of the portable fitting apparatus 10 is read out. The equipment ID is stored, for example, permanently in the system memory 82/92/102.

Next, at Step S42, the user ID of the portable fitting apparatus 10 is read. The user ID is recorded in, for example, the system memory 82/92/102. Alternatively, if the user has a contactless IC card, the user ID can be read out through an IC card reader (not shown).

Then, at Step S43, the portable fitting apparatus 10 combines the equipment ID and the user ID, both being obtained at each preceding step to generate a personal authentication key by a predetermined personal authentication key generation program.

Moreover, at Step S44, the portable fitting apparatus 10 reads out product utilization rights information from the removable storage medium inserted into the removable storage medium connection section 112.

Next, at Step S45, the portable fitting apparatus 10 delivers each of the personal authentication key generated at Step S43, the garment ID obtained from the desired piece of garment at Step S10 or S30, and the product utilization rights information read out at Step S44 to the copyright checking program.

The copyright checking program performs the checking of the product utilization rights connected with the image data corresponding to the garment ID. More specifically, for example, in the case in which garment ID is expressed by the JAN code, the portable fitting apparatus 10 reads out at least the goods manufacturer code from the garment ID, and judges whether the manufacturer indicated by the manufacturer code permits the fitting person indicated by the personal authentication key, or the user, to use the garment image data corresponding to the garment ID (the primary use and/or the secondary use of the product) or not by reference to the product utilization rights information.

### G. FITTING IMAGE COMPOSITION PROCESSING (OFFLINE)

The processing of synthesizing a fitting image of a user who tries on a desired piece of garment can be performed by combination of the image processing server 23 in a boutique and the portable fitting apparatus 10 of the user in the computer network 1. However, in the privacy protection mode in which an external computer is not permitted to use personal data such as body image data of a user, the portable fitting apparatus 10 or a domestic image processing server 53 performs the composition processing of the fitting image in offline mode from the image processing server 23 in the boutique.

Fig. 16 shows a procedure of the portable fitting apparatus 10 or the domestic image processing server 53 for synthesizing a fitting image in an offline mode from the image processing server 23 in a boutique in the format of a flowchart. The procedure is implemented in the form in which, for example, the CPU 81/91/101 executes a predetermined service application. In the following, the flowchart is referred to while the fitting image composition processing in the offline mode is described.

At first, at Step S70, the portable fitting apparatus 10 reads the personal body image data of the fitting person of garment, or the user, from the removable storage medium inserted into the removable storage medium connection section 112 of the apparatus 10.

Next, at Step S71, the portable fitting apparatus 10 performs the change of a size, the adjustment of a direction, and the like of garment image data read in the storage region (or any one of a hard disk, a memory stick, a RAM and a removable storage medium) of the apparatus 10 already on the basis of body profile data (or size data necessary for fitting such as stature, dimensions, the lengths of legs, the breadth of shoulders, and the like) and the information such as the direction of the body in an image and the like, which data and information are attached to the body image data.

Finally, at Step S72, the portable fitting apparatus 10 synthesizes the garment image data with the body image data so as to form a fitting image.

### H. FITTING IMAGE COMPOSITION PROCESSING (ONLINE)

It has been described already that the processing of synthesizing a fitting image in which a user tries on a desired piece of garment can be performed by the cooperative product of the image processing server 23 in a boutique and the portable fitting apparatus 10 of the user in the computer network 1. For example, if the personal data such as the body image data of a user or the like are placed on the outside of a privacy protection mode, because such a kind of personal data can be delivered to an external computer having a strengthened image processing function, the personal data can be processed online. Hereupon, the online fitting image composition processing by image processing server 23 in a boutique is described.

Fig. 17 shows a procedure of the offline fitting image composition processing of the image processing server 23 in the boutique in the format of a flowchart. In the following, the flowchart is referred to while the fitting image composition processing performed in an offline mode is described.

At first, at Step S13 shown in Fig. 12 or at Step S23 shown in Fig. 13, the portable fitting apparatus 10 requests the image processing server 23 in the boutique to execute image composition processing. At this time, the apparatus 10 transmits personal body image data in addition to the existence information of a product utilization rights.

Then, at Step S80, the image processing server 23 performs the change of a size, the adjustment of direction, and the like of garment image data read in the storage region (or any one of a hard disk, a memory stick, a RAM and a removable storage medium (such as a CD, a DVD, a tape and the like)) of the image processing server 23 already on the basis of body profile data (or size data necessary for fitting such as stature, dimensions, the lengths of legs, the breadth of shoulders, and the like) and the information such as the direction of the body in an image and the like, which data and information are attached to the body image data supplied from the portable fitting apparatus 10. It is needless to say that the image processing server 23 may obtain the body image data and the body profile data interactively by requesting the portable fitting apparatus 10 at Step S80.

Next, at Step S81, the image processing server 23 forms a fitting image expressing an appearance of the user trying on a desired piece of garment by synthesizing (composing) the garment image data with the body image data.

After that, the image processing server 23 checks the existence of the product utilization rights on the basis of the information supplied from the portable fitting apparatus 10 at Step S82. Similarly, the portable fitting apparatus 10 checks the existence of the product utilization rights at Step S83. It is needless to say, the image processing server 23 may perform the inquiry of the existence of the product utilization rights to the portable fitting apparatus 10 at Step S82.

Hereupon, if the user, or the portable fitting apparatus 10, is judged to have the product utilization rights, the processing of the image processing server 23 advances to Step S84. At Step S84, the image processing server 23 transmits fitting image data. And at Step S85, the portable fitting apparatus 10 receives the fitting image data by download.

On the other hand, if the image processing server 23 judges that the portable fitting apparatus 10 does not have the utilization rights related to the garment image data at Step S82, the processing of the image processing server 23 advances to Step S86. At Step S86, the image processing server 23 begins a streaming to the portable fitting apparatus 10 by means of a software program for streaming. The streaming processing includes the encoding of a synthesized fitting image and the transmission processing of the encoded data.

Moreover, on the side of the portable fitting apparatus 10, if it is judged that the apparatus itself does not have the utilization rights of the garment image data at Step S83, the processing of the apparatus 10 advances to Step S87. At Step S87, the apparatus 10 activates the software program for stream receiving, and enters into its standby mode of the reception of the data delivered by the streaming. And then, the apparatus 10 performs the reception and the decoding processing of the streaming data received from the image processing server 23.

The streaming is a real time reproducing technology by which a user reproduces a file while downloading it instead of reproducing it after the download thereof has been completed. At present, "Real System G2"(a trademark), "Windows Media Technologies"(a trademark) and the like may be cited as examples of content delivery systems equipped with the streaming technology. Because data do not remain after being reproduced by an MPEG player by the streaming, a copyright owner such as a boutique runner has no worry that products such as garment data and the like are used without permission after the usage thereof by the streaming.

Although it is not described above, it is needless to say that the image processing server 23 enters into its standby mode of transmission at Step S84 and Step S86 until the portable fitting apparatus 10 becomes ready for receiving at Step S85 or S86.

### I. DISPLAY PROCESSING OF SYNTHESIZED FITTING IMAGE

If a user or a portable fitting apparatus 10 has a product utilization rights of garment image data, the portable fitting apparatus 10 can download the synthesized fitting image from the image processing server 23, or can synthesize the fitting image on the portable fitting apparatus 10 offline. In this case, the synthesized fitting image data are stored in the system memory 82 (92 or 102) or the removable storage medium 113 of the portable fitting apparatus 10 or the local database server 52 on the domestic LAN 50 to be reused.

The user of the portable fitting apparatus 10 can look the synthesized fitting image data by the use of a browsing software program (also called as a "browser") at an arbitrary time and a place. Hereupon, the fitting image data are preferably structured as a graphic object, and structured to be able to be changed into various images by graphic processing.

The browsing software program is preferably provided with graphics operation. Hereupon, the graphics operation includes an image composition function with an actually captured background, a function for changing the posture and the direction of a graphic object, a function for changing the way of being looked by the attachment of lighting effects to the fitting image data, a function for heightening a three-dimensional display effect by a holographic effect caused by the combination of a holographic display, a function for generating an animation effect by generating several motion poses and chaining them, and the like.

As for the details of the graphic operation, reference is made to, for example, "Computer Graphics: Principles and Practice" (Second Edition in C): James D. Foley, Andries van Dam, Steven K. Feiner, John F. Hughes, Addison-Wesley, 1996, or the like.

By the use of the graphics operation functions, the user of the portable fitting apparatus 10 may change a synthesized fitting image by setting the synthesized fitting image as a base. The user can enjoy images of himself or herself trying on garment in a virtual space by adding the effects of the composition with various poses, various angles, various background images at the time of fitting of the garment, and of situation setting (for example, in daytime, in evening time, indoors, outdoors, under fine weather, cloudy weather, and the like), changes of textures (or designs) of garment data, the generation of a process for changing from a sitting pose to a standing pose by animation effect, or the like.

As another preferred embodiment of the present invention, it is possible to look at synthesized fitting images with the table type display 42 by means of a browsing software program. It is expected to be understood that the table type display 42 is equipped with, for example, either both of the removable storage medium connection section 112 or the radio communication section 110 as one of the peripheral equipment in the system configurations shown in Fig. 8 to Fig. 10.

If the table type display 42 is equipped with the removable storage medium connection section 112, by removing the removable storage medium 113 from the portable fitting apparatus 10 and connecting the removable storage medium connection section 112 of the table type display 42 in place of the removal storage medium 113, the user can look at synthesized fitting images on the table type display 42 while changing them in a similar way as described above.

Moreover, if the table type display 42 is equipped with the radio communication section 110 capable of performing communication in accordance with the same standard as that of the radio communication section of the portable fitting apparatus 10 (for example, utilizing IEEE 802.11b or Bluetooth technology), the user can transfer the fitting image data to the memory of the table type display 42 by radio communications, and then the user can look at the synthesized fitting image by the use of the browsing software program.

Moreover, as a further preferred embodiment of the present invention, a user can look at a synthesized fitting image by the use of a browsing software program by means of a function of the image processing server 53 after transferring fitting image data from the portable fitting apparatus 10 to the image processing server 53 connected with the domestic LAN 50 through the access point 54 of the domestic LAN 50. ALternatively, if the computer connected with the domestic LAN 50 is configured to be able to connect the removable storage medium 113 connected with the portable fitting apparatus 10, the user can look at a synthesized fitting image by the use of a browsing software program by means of a function of the image processing server 53 connected with the domestic LAN 50 after connecting the removable storage medium 113 with the computer and transferring fitting image data from the removable storage medium 113 to the computer. It is to be noted that, hereupon the domestic computer may be the same one as the image processing server 53, or another computer connected with the domestic LAN 50.

In the preferred embodiments of the present invention described above, image data may include not only static images but also moving pictures such as animations. Furthermore, the image data here may be either of two-dimensional image data or three-dimensional image data.

Moreover, part or the electronic fitting service according to the present invention as a whole may be implemented by means of a software program. Furthermore, all functions that can be implemented by a software program can be realized by hardware such as semiconductors or peripheral circuits. In other words, if it is desired to increase the speed of processing more than the flexibility of processing, it is preferable to replace the functions to be implemented by a software program by hardware implementation.

It is to be noted that, the removable storage medium may include a floppy disk, a super disk (such as a large capacity floppy disk, an optical disk (such as a compact disc-rewritable (CD-RW), a DVD random access memory (DVD-RAM) or the like), a magnetic record medium (such as MO or the like), or a semiconductor memory (a flash memory, a magnetic RAM (MRAM), a ferroelectricity RAM (FeRAM) or the like).

Moreover, RAM's in the configurations of Fig. 8 to Fig. 10 may be substituted by either of a dynamic RAM (DRAM), a synchronous DRAM (SDRAM), a Rambus DRAM (RDRAM), an intelligent RAM (IRAM), an MRAM, a ferroelectric random access memory (FRAM) and the like.

In the above, although the present invention been described by referring to specific preferred embodiments, it is to be understood to person skilled in the art that the present invention may be performed or realized by any modifications, combination, sub-combination or substitutions of the preferred embodiments within the subject matter of the present invention. In other words, the present invention has been disclosed in its illustrative form through its preferred embodiments, and therefore the contents described in the present specification should not be interpreted in a limitative way. For judgment of the subject matter of the present invention, the following claims should be referred.

It is to be noted that, as shown in Fig. 8 to Fig. 10, the portable fitting apparatus 10 described in the present specification employs a configuration example supposing bus type architecture such as a peripheral component interconnect (PCI) bus or the like as an internal interface (or an input-output interface) connecting between large scale integrations (LSI's) on a printed wiring board or between substrates. However, even if a "serial transmission" system expected to be a standard of a future input-output interface is employed in the present invention, the essential qualities of the present invention does not change at all. It is to be noted that, as examples of serial transmission systems, at present, it is possible to cite "Rapid IO", the standardization of which is being promoted by Motorola Inc. and Mercury Computer Systems, Inc., "Hyper Transport", the standardization of which is being promoted by AMD Inc., Third Generation I/O (3GIO), the

## Claims

1. A fitting image providing system for providing on a computer network a fitting image formed by image composition based on body image data of a user and garment image data, said system comprising:
a user terminal including at least ID reading means for acquiring a garment ID, communication means and fitting image displaying means;
an interface for connecting said user terminal to said computer network; and
an image processing server connected to said computer network to perform image composition of said fitting image based on said body image data of said user and said garment image data.

2. The fitting image providing system according to claim 1, wherein:
under a privacy protection mode for protecting the body image data, said user terminal acquires said garment image data from said garment ID, and generates said fitting image by performing image composition of said fitting image data; and
under other modes, said user terminal transfers said body image data to said image processing server through said computer network and requests generation of said fitting image data.

3. The fitting image providing system according to claim 1, wherein said user terminal executes acquisition process for acquiring utilization rights corresponding to said garment ID if said user does not have said utilization rights.

4. The fitting image providing system according to claim 1, wherein:
said image processing server transfers said fitting image data to said user terminal if said user has utilization rights corresponding to said garment ID; and
said image processing server transfers said fitting image data to said user terminal by streaming or in a format under which said fitting image data cannot be reutilized if the user does not have said utilization rights.

5. A method for providing fitting image formed by image composition based on body image data of a user and garment image data on a computer network including a user terminal having at least ID reading means for acquiring a garment ID, communication means and fitting image displaying means, an interface for connecting said user terminal to said computer network and an image processing server connected to said computer network to perform image composition of said fitting image based on said body image data of said user and said garment image data, said method comprising the steps of:
acquiring said garment image data corresponding to said garment ID and generating said fitting image by performing image composition of said fitting image data, under a privacy protection mode for protecting said body image data; and
transferring said body image data to said image processing server through said computer network and requesting generation of said fitting image data, under other modes.

6. The method for providing fitting image according to claim 5, further comprising the step of:
acquiring rights to utilize garment image data corresponding to said garment ID if said user does not have said rights to utilize said garment image data.

7. The method for providing fitting image according to claim 5, further comprising the steps of:
transferring said fitting image data to said user terminal, if said user has said rights to utilize garment image data corresponding to said garment ID; and
transferring said fitting image data to said user terminal by streaming or in a format in which said fitting image data cannot be reutilized, if the user does not have said rights to utilize said garment image data.

8. A fitting image generating apparatus for generating fitting image formed by performing image composition based on body image data of a user and garment image data, said apparatus comprising:
receiving means for receiving request for generation of a fitting image formed by image composition based on body image data of a user and garment image data;
acquisition means for acquiring said garment image data corresponding to garment requested by said user;
checking means for checking whether said user has rights to utilize said garment image data;
generating means for generating said fitting image; and
transmission means for transmitting said fitting image to a user terminal according to possession of said rights to utilize said garment image data.

9. The fitting image generating apparatus according to claim 8, wherein said means for transmitting fitting image to said user terminal transfers said generated fitting image data to said user terminal if said user has said rights to utilize said garment image data, and said transferring means transfers said generated fitting image data to said user terminal by streaming or in a format under which said fitting image data cannot be reutilized if said user does not have said rights to utilize said garment image data.

10. A method for generating fitting image formed by performing image composition based on body image data of a user and garment image data, said method comprising the steps of:
receiving step for receiving request for generation of a fitting image formed by image composition based on body image data of a user and garment image data;
acquisition step for acquiring said garment image data corresponding to garment requested by said user;
checking step for checking whether said user has rights to utilize said garment image data;
generating step for generating said fitting image; and
transmission step for transmitting said fitting image to a user terminal according to possession of said rights to utilize said garment image data.

11. The method for generating a fitting image according to claim 10, wherein said step for transmitting fitting image to said user terminal transfers said generated fitting image data to said user terminal if said user has said rights to utilize said garment image data, and said transferring step transfers said generated fitting image data to said user terminal by streaming or in a format under which said fitting image data cannot be reutilized if said user does not have said rights to utilize said garment image data.

12. A fitting image utilization terminal for utilizing a fitting image formed by performing image composition based on body image data of a user and garment image data, said terminal comprising:
ID reading means for acquiring garment ID;
communication means for establishing connection to a computer network;
checking means for checking existence of rights to utilize said garment image data;
generating means for generating said fitting image;
reception means for receiving said fitting image and/or said garment image data according to possession of said rights to utilize said garment image data; and
display means for displaying said fitting image.

13. The fitting image utilization terminal according to claim 12, further comprising an acquisition means for acquiring rights to utilize garment image data corresponding to said garment ID if said user does not have said rights to utilize said garment image data.

14. The fitting image utilization terminal according to claim 12, wherein said receiving means receives fitting image data from an image processing server, if said user has rights to utilize said garment image data corresponding to said garment ID, and receives said fitting image data from said image processing server by streaming or in a format under which said fitting image data cannot be reutilized, if said user does not have said rights to utilize said garment image data.

15. The fitting image utilization terminal according to claim 12, further comprising fitting image generating means for performing image composition of body image data of said user and garment image data, wherein
under a privacy protection mode for protecting said body image data, said user terminal acquires said garment image data corresponding to said garment ID, and generates said fitting image by performing image composition of said fitting image data; and
under other modes, said user terminal transfers said body image data to an image processing server and requests generation of said fitting image data.

16. A method for utilizing a fitting image formed by performing image composition based on body image data of a user and garment image data, said method comprising the steps of:
acquiring garment ID;
establishing connection to a computer network;
checking existence of rights to utilize said garment image data;
generating said fitting image;
receiving said fitting image and/or said garment image data according to possession of said rights to utilize said garment image data; and
displaying said fitting image.

17. The method for utilizing a fitting image according to claim 16, further comprising a step of acquiring said rights to utilize said garment image data corresponding to said garment ID if said user does not have said rights to utilize said garment image data.

18. The method for utilizing a fitting image according to claim 16, wherein said step of receiving receives fitting image data from an image processing server, if said user has utilization rights garment image data corresponding to said garment ID, and receives said fitting image data from said image processing server by streaming or in a format under which said fitting image data cannot be reutilized, if said user does not have said rights to utilize said garment image data.

19. The method for utilizing a fitting image according to claim 16, further comprising:
generating step for performing image composition of body image data of said user and garment image data; and
under a privacy protection mode for protecting said body image data, acquisition step for acquiring said garment image data corresponding to said garment ID , and generating step for generating said fitting image by performing image composition of said fitting image data; and
under other modes, transferring step for transferring said body image data to an image processing server and requesting step for requesting generation of said fitting image data.

20. A storage medium storing software program in computer readable form, said software program executing on a computer system a process for generating a fitting image formed by image composition based on body image data of a user and garment image data, said software program comprising the steps of:
receiving a request for generation of said fitting image;
acquiring said garment image data corresponding to garment requested by said user;
checking whether said user has rights to utilize said garment image data;
generating said fitting image and
transmitting said fitting image to a user terminal according to possession of said rights to utilize said garment image data.

21. A storage medium storing software program in computer readable form, said software program executing on a computer system a processing for utilizing a fitting image formed by image composition based on body image data of a user and garment image data, said software program comprising:
acquiring garment ID;
establishing connection to a computer network;
checking existence of rights to utilize said garment image data;
generating said fitting image;
receiving said fitting image and/or said garment image data according to possession of said rights to utilize said garment image data; and
displaying said fitting image.

22. A computer program executing on a computer system a processing for generating fitting image formed by image composition based on body image data of a user and garment image data, said computer program comprising the steps of:
receiving a request for generation of said fitting image;
acquiring said garment image data corresponding to garment requested by said user;
checking whether said user has rights to utilize said garment image data;
generating said fitting image; and
transmitting said fitting image to a user terminal according to possession of said rights to utilize said garment image data.

23. A computer program executing on a computer system a processing for utilizing a fitting image formed by image composition based on body image data of a user and garment image data, said software program comprising:
acquiring garment ID;
establishing connection to a computer network;
checking existence of rights to utilize said garment image data;
generating said fitting image;
receiving said fitting image and/or said garment image data according to possession of said rights to utilize said garment image data; and
displaying said fitting image.
